# EUROPEAN PATENT APPLICATION

(11) **EP 2 781 853 A1**
(43) Date of publication of application: **24.09.2014**
(21) Application number: 12849473.9
(22) Date of filing: 28.09.2012
(51) Int. Cl.: F24H 1/00, F02G 5/04, H01M 8/00, H01M 8/04

(54) **COGENERATION SYSTEM**

(30) Priority: 14.11.2011 JP 2011248332
(71) Applicant: Panasonic Corporation, Osaka 571-8501 (JP)
(72) Inventor: SHIMADA, Takanori, 2-1-61 Shiromi, Chuo-ku, Osaka 540-6207 (JP); KATOU, Motomichi, 2-1-61 Shiromi, Chuo-ku, Osaka 540-6207 (JP); FUJII, Masashi, 2-1-61 Shiromi, Chuo-ku, Osaka 540-6207 (JP)
(74) Representative: Grünecker, Kinkeldey, Stockmair & Schwanhäusser
(86) International application number: PCT/JP2012/006237
(87) International publication number: WO 2013/073097

(57) **Abstract**

In a cogeneration system (10A), a controller (20A) sets a control variable, which is a variable according to user's heat demand, on every unit time set in advance, and controls operation of the cogeneration device (11A). Further, when a heat storage quantity detected by a heat quantity detector (13) is out of a target range of the heat storage quantity set in advance, the controller (20A) changes a setting value of the control variable in a subsequent unit time, and controls operation of the cogeneration device (11A).

## Description

### Technical Field

The present invention relates to a cogeneration system for generating electric power and heat.

### Background Art

In general, a cogeneration system includes an electric power engine such as a fuel cell or a gas engine, a heat accumulator, and the like. In an operation control of a cogeneration system, operation is performed to satisfy needs of a user, and therefore, it is essential to calculate the quantity of heat that is used by the user (for the sake of description, this will be referred to as a "used heat quantity").

The heat accumulator provides heat energy to various kinds of heat loads (for example, a water heater and a heater), and therefore, the heat quantity provided from the heat accumulator may be regarded as a used heat quantity. Therefore, appropriately finding the heat quantity provided from the heat accumulator to the heat load is important in calculation of the used heat quantity.

For example, in a cogeneration system having a configuration including a hot water storage unit serving as a heat accumulator, in many cases, the hot water storage unit has measurement instrument such as temperature sensors such as thermistors and flowmeters which are provided at multiple locations of water circuits including tanks in order to calculate a used heat quantity. The cogeneration system calculates, as necessary, the heat quantity supplied to a heat load (used heat quantity) on the basis of the data collected by these measurement instruments. Accordingly, the usage pattern of the heat quantity used by the user (or the usage pattern of the energy) can be estimated, and therefore, the cogeneration system can make an operation plan which is suitable for the user on the basis of the estimated usage pattern.

For example, Patent Literature 1 suggests an energy supply evaluation system that can simplify inputting of data when evaluating the usage cost by estimating the energy demand such as electric power and/or heat, and that is for the purpose of improving the reliability of the evaluation result.

This energy supply evaluation system includes an estimation unit configured to estimate energy (electric power and heat) usage quantities for each time period of a day. The energy supply evaluation system is configured to change a computation processing method according to which this estimation unit estimates the energy usage quantity in accordance with inputted predetermined data. A factor that greatly affects the energy usage quantity is input as the predetermined data, whereby the energy supply aspect (the usage pattern of the energy) that is suitable for the energy demand tendency is output. It should be noted that examples of predetermined data include information for identifying the difference in the life style of a user (energy consumer) or geographic information (for example, information about a region in view of, e.g., the difference in the heat insulating property of a house in a region, and information about a temperature).

Patent Literature 2 suggests an operation control system of a household cogeneration system for the purpose of realizing operation control achieving greater power saving on the basis of a relatively small amount of data using a simple determination logic.

In this operation control system, first, a deviation is calculated and stored with regard to a sampled value of an electric power load on every predetermined period of time. The electric power loads and the electric power load deviation are read out under a predetermined condition, and are used for load-following operation of the cogeneration device. Then, when the load-following operation is performed on the basis thereof, the electric power output, the electric power efficiency, the heat recovery rate, the amount of purchased electric power, the amount of collected heat of the cogeneration device are calculated, and then, the activation time and the stop time thereof are temporarily determined. Then, the amount of consumed energy of an operation pattern that has been temporarily determined is calculated, and an operation pattern attaining the smallest amount of consumed energy is selected.

### Citation List

### Patent Literature

Patent Literature 1: Japanese Patent Laid-open Publication No. 2007-219912
Patent Literature 2: Japanese Patent Laid-open Publication No. 2005-030211

### Summary of Invention

### Technical Problem

The energy supply evaluation system disclosed in Patent Literature 1 estimates the energy usage quantity using not only information about the family structure of a user, whether or not the user is at home in daylight hours, and information about the floor area size, but also information about the actual values of the energy usage quantities. The computation processing method for this estimation is changed in accordance with the predetermined data. The predetermined data are the difference in user's life style, or geographic information, e.g., whether or not there is a building of the user, but such information is derived from wide range statistical information. More specifically, in this energy supply evaluation system, the computation processing method is changed on the basis of statistical information, and therefore, the usage pattern of the energy thus obtained may be different from the usage pattern suitable for the individual user.

The operation control system disclosed in Patent Literature 2 temporarily determines the operation pattern according to the computation using the electric power load and the electric power load deviation, and thereafter selects the operation pattern that attains the smallest quantity of consumed energy. Therefore, it takes a certain period of time to perform the computation processing for selecting the ultimate operation pattern, and in addition, the storage capacity may be increased due to the computation.

Further, in some of the cogeneration systems, the measurement function in a heat accumulator may be insufficient. More specifically, for example, the heat accumulator may not have any measurement instrument at all, or have only a small number of measurement instruments provided therein, or have only simplified measurement instruments which collect only insufficient data. In this case, the cogeneration system cannot appropriately calculate the used heat quantity, and therefore, it is difficult to make an operation plan suitable for the user.

For example, in any of Patent Literatures 1 and 2, the system disclosed therein is assumed to be configured such that a heat accumulator and the like appropriately has a predetermined measurement instrument, and by causing the measurement instrument to collect sufficient data, the system correctly measures, as necessary, the heat quantity supplied from the heat accumulator to the heat load (used heat quantity). For this reason, when the measurement instrument is not appropriately provided, and sufficient data cannot be collected, then, it is substantially difficult to obtain the appropriate usage pattern of the energy or the ultimate operation pattern.

The present invention is made in order to solve such problems, and it is an object of the present invention to provide a cogeneration system capable of performing operation control suitable for the user by using simple computation processing even in a case where it is impossible to sufficiently find a heat quantity provided from a heat accumulator to a heat load.

### Solution to Problem

In order to solve the problems, a cogeneration system according to the present invention comprises a cogeneration device configured to provide electric power and heat, a heat accumulator configured to thermally store the heat provided by the cogeneration device, a heat quantity detector configured to detect a heat storage quantity in the heat accumulator, and a controller, and the controller sets a control variable, which is a variable according to user's heat demand, on every unit time set in advance, and controls operation of the cogeneration device, and when the heat storage quantity detected by the heat quantity detector is out of a target range of the heat storage quantity set in advance, the controller changes a setting value of the control variable in a subsequent unit time, and controls operation of the cogeneration device.

A first heat quantity which is an upper limit target value of the heat storage quantity may be set in advance as a target range of the heat storage quantity, and when the heat storage quantity detected by the heat quantity detector is of a value more than the first heat quantity, the controller may reduce a setting value of the control variable in a subsequent unit time, and control operation of the cogeneration device.

Further, a second heat quantity which is a lower limit target value of the heat storage quantity and which is a value less than the first heat quantity may be set in advance as a target range of the heat storage quantity, and when the heat storage quantity detected by the heat quantity detector is of a value less than the second heat quantity, the controller may increase a setting value of the control variable in a subsequent unit time, and control operation of the cogeneration device.

The above object, other objects, features, and advantages of the present invention would become clear in view of the detailed description about preferred embodiments described below with reference to appended drawings.

### Advantageous Effects of Invention

According to the above configuration, the present invention achieves the effect of capable of providing a cogeneration system capable of performing operation control suitable for the user even in a case where it is impossible to appropriately find a heat quantity provided from a heat accumulator to a heat load.

### Brief Description of Drawings

Fig. 1 is a block diagram illustrating an example of schematic configuration of a cogeneration system according to an embodiment 1 of the present invention.
Fig. 2 is a block diagram illustrating an example of specific configuration of a controller of a cogeneration system as illustrated in Fig. 1.
Fig. 3 is a flowchart illustrating an example of processing for setting a reference value and a control variable of a heat demand in the controller of the cogeneration system as illustrated in Fig. 2.
Fig. 4 is a flowchart illustrating an example of processing of changing the control variable in the controller of the cogeneration system as illustrated in Fig. 2.
Fig. 5 is a block diagram illustrating an example of processing for stopping operation of the cogeneration device in a case where a detected heat storage quantity is more than a first heat quantity in the controller of the cogeneration system as illustrated in Fig. 2.
Fig. 6 is a time chart illustrating an example of change of an electric power generation amount and a heat storage quantity over time in a case where the detected heat storage quantity is more than the first heat quantity in the cogeneration system as illustrated in Fig. 1.
Fig. 7 is a time chart illustrating an example of change of an electric power generation amount and a heat storage quantity over time in a case where the detected heat storage quantity is less than a second heat quantity in the cogeneration system as illustrated in Fig. 1.
Fig. 8 is a flowchart illustrating an example of processing of setting a control variable in a controller of a cogeneration system according to an embodiment 2 of the present invention.
Fig. 9 is a time chart illustrating an example of change of an electric power generation amount and a heat storage quantity over time in a case where the detected heat storage quantity is more than a first heat quantity in the cogeneration system performing the processing as illustrated in Fig. 8.
Fig. 10 is a flowchart illustrating an example of processing of changing the control variable in a case where the control variable does not change for a certain period of time in a cogeneration system of an embodiment 3 of the present invention.
Fig. 11 is a time chart illustrating an example of change of the electric power generation amount and the heat storage quantity over time in a case where the control variable does not change for a certain period of time in the cogeneration system performing the processing as illustrated in Fig. 10.
Fig. 12 is a block diagram illustrating an example of schematic configuration of a cogeneration system according to an embodiment 4 of the present invention.
Fig. 13 is a block diagram illustrating an example of specific configuration of a controller of the cogeneration system as illustrated in Fig. 12.
Fig. 14 is a flowchart illustrating an example of processing for changing a control variable in the controller of the cogeneration system as illustrated in Fig. 12.
Fig. 15 is a time chart illustrating an example of change of an electric power generation amount and a heat storage quantity over time in the cogeneration system performing the processing as illustrated in Fig. 14.

### Description of Embodiments

A cogeneration system according to the present invention comprises a cogeneration device configured to provide electric power and heat, a heat accumulator configured to thermally store the heat provided by the cogeneration device, a heat quantity detector configured to detect a heat storage quantity in the heat accumulator, and a controller, and the controller sets a control variable, which is a variable according to user's heat demand, on every unit time set in advance, and controls operation of the cogeneration device, and when the heat storage quantity detected by the heat quantity detector is out of a target range of the heat storage quantity set in advance, the controller changes a setting value of the control variable in a subsequent unit time, and controls operation of the cogeneration device.

According to the above configuration, the control variable according to the heat demand is set in advance, and the heat quantity accumulated in the heat accumulator (heat storage quantity) is detected instead of the heat quantity provided from the heat accumulator to the heat load, and the detected heat quantity is used for changing (reconfiguring) the control variable. Therefore, even when the heat quantity provided from the heat accumulator to the heat load cannot be sufficiently found out, the cogeneration device can be caused to operate in accordance with the user's heat demand by just changing the control variable according to the change of the heat storage quantity. As a result, operation control suitable for the user can be performed by simple computation processing.

In the cogeneration system having the above configuration, a first heat quantity which is an upper limit target value of the heat storage quantity may be set in advance as a target range of the heat storage quantity, and when the heat storage quantity detected by the heat quantity detector is of a value more than the first heat quantity, the controller may reduce a setting value of the control variable in a subsequent unit time, and control operation of the cogeneration device.

In the cogeneration system having the above configuration, a second heat quantity which is a lower limit target value of the heat storage quantity and which is a value less than the first heat quantity may be set in advance as a target range of the heat storage quantity, and when the heat storage quantity detected by the heat quantity detector is of a value less than the second heat quantity, the controller may increase a setting value of the control variable in a subsequent unit time, and control operation of the cogeneration device.

In the cogeneration system having the above configuration, when the controller determines that the setting value of the control variable does not change over a plurality of consecutive unit times, the controller may increase the setting value of the control variable, and control operation of the cogeneration device.

In the cogeneration system having the above configuration, when the heat storage quantity detected by the heat quantity detector is more than the first heat quantity, the controller may stop the cogeneration device in operation.

In the cogeneration system having the above configuration, the cogeneration device may include an energy consumption quantity calculator configured to calculate an integrated value of the heat storage quantity detected by the heat quantity detector as an energy consumption quantity of the heat load, a first consumption quantity may be set in advance as an upper limit target value of the energy consumption quantity, and when the energy consumption quantity calculated by the energy consumption quantity calculator is more than the first consumption quantity, the controller may change the setting value of the control variable to a maximum value, and control operation of the cogeneration device.

In the cogeneration system having the above configuration, a second consumption quantity which is a value less than the first consumption quantity may be set in advance as a lower limit target value of the energy consumption quantity, and when the energy consumption quantity calculated by the energy consumption quantity calculator is less than the second consumption quantity, the controller performs may control so as not to cause the cogeneration device to operate.

In the cogeneration system having the above configuration, a reference value of the user's heat demand may be set based on at least one of a floor area size and a heat insulating performance of a building where the cogeneration device is installed.

In the cogeneration system having the above configuration, at least one of a heat supply quantity, an electric power generation amount, and an electric power generation time of the cogeneration device may be used as the control variable. Further, an electric power generation start time of the cogeneration device may be used in combination as the control variable.

Hereinafter, preferred embodiments of the present invention will be hereinafter described with reference to the drawings. It should be noted that the same or corresponding elements will be denoted with the same reference numerals throughout all of the drawings below, and repeated description thereabout is omitted.

### (Embodiment 1)

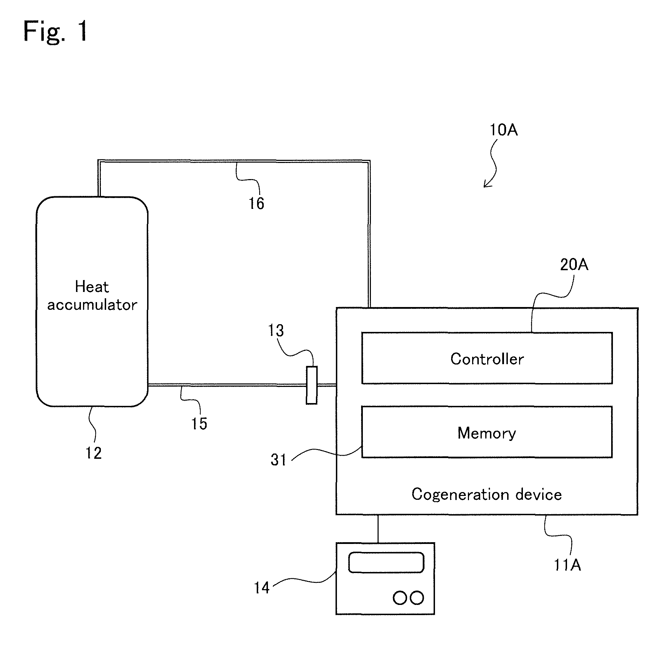

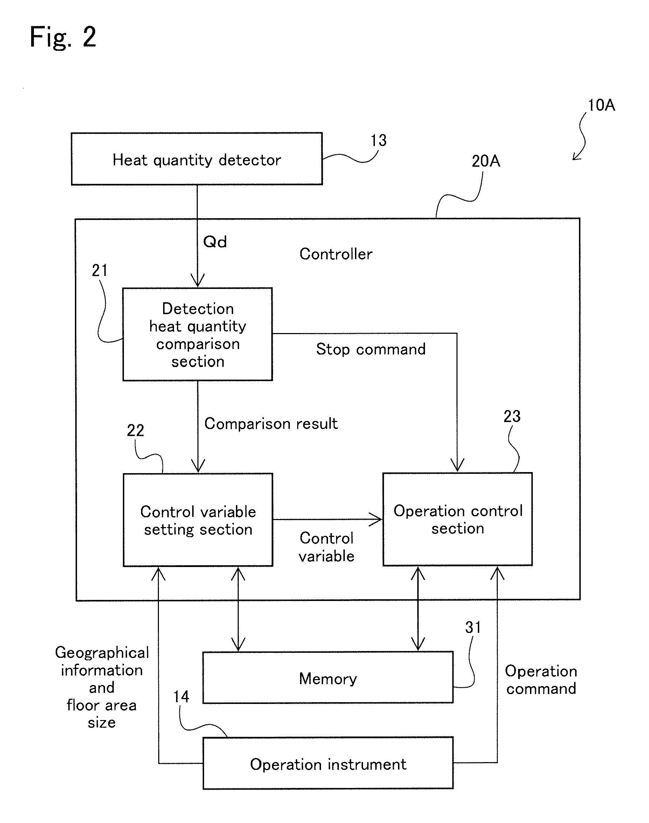

[Configuration of cogeneration system] First, an example of a specific configuration of a cogeneration system according to an embodiment 1 of the present invention will be described with reference to Figs. 1 and 2.

As illustrated in Fig. 1, a cogeneration system 10A according to the present embodiment include a cogeneration device 11A, a heat accumulator 12, a heat quantity detector 13, an operation instrument 14, a first circuit 15, and a second circuit 16.

The specific configuration thereof is not particularly limited as long as the cogeneration device 11A provides electric power and heat. In the present embodiment, for example, a fuel cell configured to generate electric power by using fuel gas containing hydrogen and oxidizing gas, a gas engine configured to generate electric power by burning combustible gas, or the like can be preferably used as the cogeneration device 11A.

The specific configuration thereof is not particularly limited as long as the heat accumulator 12 accumulates (stores) heat provided by the cogeneration device 11A. In the present embodiment, a hot water storage tank using water as a heat medium can be preferably used as the heat accumulator 12. As illustrated in Fig. 1, the cogeneration device 11A and the heat accumulator 12 are connected by the first circuit 15 and the second circuit 16.

In the present embodiment, the first circuit 15 and second circuit 16 may be pipes for passing a heat medium (water in the present embodiment) between the cogeneration device 11A and the heat accumulator 12. Among them, the first circuit 15 is a pipe for providing the heat medium accumulated in the heat accumulator 12 to the cogeneration device 11A. On the other hand, the second circuit 16 is a pipe for circulating and providing the heat medium supplied via the first circuit 15 from the cogeneration device 11A to the heat accumulator 12.

The cogeneration device 11A has a circulation mechanism (for example, a publicly known pump and the like) for a heat medium, not illustrated. When the heat medium (for example, cold water) in the heat accumulator 12 is provided (input) to the cogeneration device 11A via the first circuit 15 by the circulation mechanism, the heat generated in the cogeneration device 11A is absorbed (collected) by the heat medium. Then, when the heat medium (hot water) which has absorbed the heat is provided (input) from the cogeneration device 11A to the heat accumulator 12 by the circulation mechanism, the heat energy is provided from the heat medium to a heat load (for example, a water heating device, a heating device, and the like) not illustrated.

The heat quantity detector 13 is a measurement instrument for detecting the heat storage quantity in the heat accumulator 12, and the specific configuration thereof is not particularly limited. This heat quantity detector 13 is configured to estimate the heat storage quantity in the heat accumulator 12 on the basis of the amount of heat medium and the temperature of the heat medium flowing in the first circuit 15, and the heat storage quantity to be detected is determined in advance in accordance with a position of the heat quantity detector 13.

For example, in the present embodiment, the heat quantity detector 13 is not provided in the heat accumulator 12, and is provided in the first circuit 15 (a portion where the heat medium is input from the heat accumulator 12 to the cogeneration device 11A). If the heat storage quantity is at the limit when an average temperature of the heat accumulator 12 is 60°C to 65°C, the temperature detectable by the heat quantity detector 13 is about 35°C to 40°C.

The operation instrument 14 is an input and output device for operating the cogeneration system 10A, and is configured to input various kinds of operation information, and to display (output) operation information. According to the operation of the operation instrument 14, an operation command of the cogeneration device 11A is generated, and is output to a controller 20A. In the present embodiment, the operation instrument 14 is configured to be a wired or wireless remote controller, and includes an operation button, an operation switch, a display lamp, a display panel, and the like which are publicly known.

As illustrated in Fig. 1, the cogeneration device 11A includes the controller 20A and a memory 31, and the controller 20A controls operation of the cogeneration device 11A on the basis of information which is input from the heat quantity detector 13 and the operation instrument 14. More specifically, as illustrated in Fig. 2, the controller 20A includes a detection heat quantity comparison section 21, a control variable setting section 22, and an operation control section 23.

The detection heat quantity comparison section 21 compares the heat storage quantity detected by the heat quantity detector 13 (indicated as Qd in Fig. 2) with a reference heat quantity (threshold value) which is set in advance, and outputs the comparison result to the control variable setting section 22. When the detection heat quantity comparison section 21 obtains a comparison result indicating that the detected heat storage quantity is more than the reference heat quantity, the detection heat quantity comparison section 21 outputs a stop command to the operation control section 23.

On the basis of, e.g., the input information given by the operation instrument 14 or the comparison result given by the detection heat quantity comparison section 21, the control variable setting section 22 refers to various kinds of information stored in the memory 31. The control variable setting section 22 sets or changes a control variable which is one of pieces of operation control information of the cogeneration device 11A, and outputs the control variable to the operation control section 23. The operation control section 23 performs operation control of the cogeneration device 11A on the basis of information, e.g., the control variable (operation control information) which is output from the control variable setting section 22, the operation control information stored in the memory 31, the operation command which is output from the operation instrument 14, or the stop command which is output from the detection heat quantity comparison section 21.

The memory 31 stores geographical information and statistical information used for setting the control variable with the control variable setting section 22, various kinds of control information used for the operation control by the operation control section 23, and the like. Therefore, the memory 31 is configured to be able to read at least information stored by the control variable setting section 22 and the operation control section 23. As described later, the control variable setting section 22 and operation control section 23 is also configured to write, to the memory 31, various kinds of information generated according to the control. Therefore, in Fig. 2, the memory 31 and the control variable setting section 22 are shown as being connected by an arrow in both directions, and the memory 31 and the operation control section 23 are shown as being connected by an arrow in both directions.

The specific configuration of the controller 20A is not particularly limited. The specific configuration of the controller 20A may be a functional configuration achieved when an arithmetic device such as a CPU operates according to a program stored in the memory 31, or may be configured as a publicly known logic circuit and the like including a switching element, a subtracter, a comparator, and the like. The memory 31 may be constituted by, e.g., a storage element and/or a storage device which are publicly known. The memory 31 may be a storage device incorporated into the cogeneration device 11A, may be a storage device attached externally thereto, or may be both of them. Examples of internal storage devices include an EEPROM, a hard disk, and the like.

Further, in the present embodiment, the controller 20A includes the detection heat quantity comparison section 21, the control variable setting section 22, and the operation control section 23, but the specific configuration of the controller 20A is not limited to the configuration as illustrated in Fig. 2. The controller 20A may include other publicly known elements, or may not include some of the elements.

### [Control variable and initial setting processing thereof]

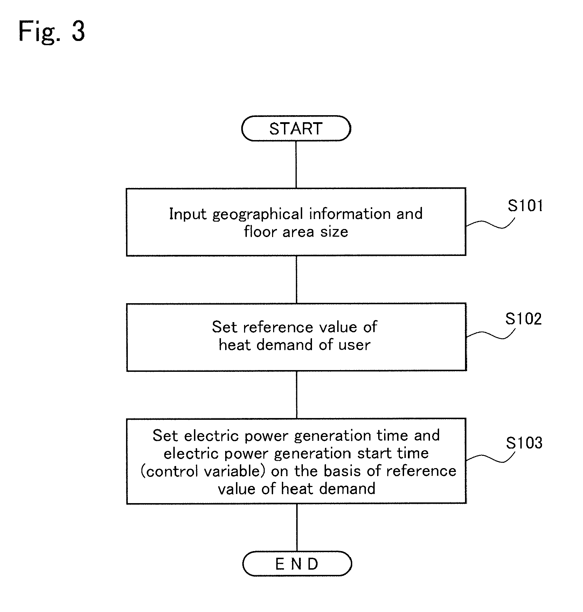

With reference to Fig. 3, description will now be given in detail of, in the cogeneration system 10A configured as described above, a control variable set by the control variable setting section 22 and processing for initially setting the control variable as well as the reference value of the heat demand.

The control variable in the present embodiment is one of pieces of operation control information of the cogeneration device 11A as described above, and is defined as a variable according to (the magnitude of) the heat demand of the user. More specifically, examples of such control variables include at least one of the heat supply quantity, the electric power generation amount, and the electric power generation time, but the control variables is not particularly limited. These control variables are variables which are set for each unit time set in advance.

The unit time is a predetermined time (period) which is set to control the operation of the cogeneration device 11A, and is set as a period serving as a section in which the operation of the cogeneration device 11A is repeated. In general, the demand of the heat and the electric power is often repeated in a cycle of a day, and therefore, in the present embodiment, the unit time is set to one day (24 hours). Needless to say, the unit time is not limited to one day. The unit time may be, for example, one week, ten days, one month, or every season as long as it is a preferable period in terms of the operation control of the cogeneration device 11A.

Each of the heat supply quantity, the electric power generation amount, and the electric power generation time which are control variables used in the present embodiment is a variable per unit time, and can be estimated from the heat demand of the building where the cogeneration device 11A is installed (the heat quantity required by the user of the building).

For example, the heat supply quantity can be estimated as the heat quantity required per unit time on the basis of the heat demand. The electric power generation amount can be estimated, from the electric power performance of the cogeneration device 11A, as the electric power generation amount with which heat supply quantity can be supplied per unit time. The electric power generation time can be estimated, from the electric power performance of the cogeneration device 11A, as an operating time (operation time) of the cogeneration device 11A with which the heat supply quantity or the electric power generation amount per unit time can be achieved.

Further, in the present embodiment, as the control variable, at least one of the heat supply quantity, the electric power generation amount, and the electric power generation time described above and an electric power generation start time may be used in combination. When the electric power generation start time is additionally used as the control variable, the operating time zone of the cogeneration device 11A can be set within the unit time in accordance with the peak of the heat demand.

The control variable such as the heat supply quantity, the electric power generation amount, or the electric power generation time is an absolute value achieved by the cogeneration device 11A within the unit time. Therefore, when at least such control variable is used for the operation control of the cogeneration device 11A, the heat supply or the electric power supply according to the heat demand within the unit time can be achieved. In this case, the unit time includes not only a time zone in which heat or electric power is not so much needed (time zone of low heat demand) but also a time zone in which much heat or electric power is needed (time zone of high heat demand). For this reason, when the control variable of the electric power generation start time is additionally used, the cogeneration device 11A can be operated in accordance with the time zone of the high heat demand within the unit time.

The electric power generation start time can be estimated by being calculated back from the time when the time zone of the high heat demand starts (the time when the heat demand begins to rise) on the basis of the required heat quantity (heat supply quantity), the electric power generation amount, or the electric power generation time. The time zone of the high heat demand (or the time when the heat demand begins to rise) can be estimated from the statistical information of the heat demand.

It should be noted that the electric power generation start time is not the control variable according to the heat demand, and therefore, it is different from the control variable such as the heat supply quantity, the electric power generation amount, the electric power generation time, and the like, and the change processing based on the detection of the heat storage quantity as described later is not performed alone, and change is appropriately made in accordance with change of another control variable. Therefore, in the present embodiment, such control variable will be referred to as "auxiliary control variable" for the sake of convenience of description, but in the present embodiment, the "control variable" in the broad sense includes not only the "control variable" (the control variable according to the heat demand) in the narrow sense such as the heat supply quantity, the electric power generation amount, the electric power generation time, and the like but also the auxiliary control variable such as the electric power generation start time.

Not only the electric power generation start time but also, for example, the time zone of the high heat demand or the low heat demand described above can be used as the auxiliary control variable. When the time zones are used in combination with, for example, the electric power generation time, the peak of the heat demand and the electric power generation time can be matched with each other, or the electric power generation time can be set so as to exclude the time zone when the heat demand is low, and therefore, the time zones can be used as the auxiliary control variable. Needless to say, the auxiliary control variable is not limited to the time zone such as the heat demand, the electric power generation start time, and the like. Other variable may also be used.

As can be seen from the description above, in this case, the control variable can be estimated if at least the heat demand is known. This heat demand can be statistically estimated from the heat insulating performance and the floor area size of the building where the cogeneration device 11A is installed. Therefore, in the present embodiment, first, the heat insulating performance and the floor area size are input into the controller 20A of the cogeneration device 11A, and the reference value of the heat demand (model value based on the heat insulating performance and the floor area size) is set on the basis of the information about the heat insulating performance and the floor area size. When the reference value of the heat demand is set, the initial value of the control variable can also be set (initially set) in accordance with the reference value.

As illustrated in Fig. 3, the initial setting processing of the reference value of the heat demand and the control variable includes three steps in the present embodiment. First, since the cogeneration system 10A includes the operation instrument 14, information given by the operation instrument 14 can be input when the controller 20A starts the initial setting processing. Then, a user (or, a person who installs the cogeneration system 10A or a person in charge of maintenance of the cogeneration system 10A) uses the operation instrument 14 to input the geographical information and the floor area size of the building where the cogeneration system 10A is installed (step S101). As illustrated in Fig. 2, the information is output to the control variable setting section 22 of the controller 20A.

The control variable setting section 22 refers to the geographical information stored in the memory 31 to collate the geographical information which is input from the operation instrument 14, determines the heat insulating performance of the building, and sets the reference value of the heat demand from the heat insulating performance and the floor area size which has been input (step S102).

The geographical information about the building is used as information for determining the heat insulating performance of the building. More specifically, when the location of the building (geographical information) is found, the climate, the average temperature, the temperature change in the region, and the like are determined, and therefore, the heat insulating performance which is applied to the building is also found out. For this reason, the heat demand of the building can be statistically estimated from the heat insulating performance and the floor area size of the building. Therefore, the control variable setting section 22 can set the reference value of the heat demand from the geographical information and the floor area size.

For example, when the building is a standard house, the floor area size may be regarded as being in a predetermined range, and therefore, in this case, the control variable setting section 22 can set the reference value of the heat demand from only the heat insulating performance (geographical information). Alternatively, when the target region where the cogeneration system 10A is installed has substantially the same climate condition, the building can be regarded as having substantially the same heat insulating performance regardless of the location (geographical information). In this case, the control variable setting section 22 can set the reference value of the heat demand from only the floor area size. Therefore, in the present embodiment, the reference value of the heat demand may be set on the basis of at least one of the heat insulating performance and the floor area size.

In this case, the reference value of the heat demand may be calculated by the control variable setting section 22 in accordance with the input of the geographical information and the floor area size. Alternatively, for example, as shown in Table 1 below, the reference value of the heat demand may be classified into multiple classes in advance as a comparison table for comparison of the geographical information (heat insulating performance) and the floor area size, and may be stored to the memory 31.

**[Table 1]**

| | Region X | Region Y |
|---|---|---|
| | Heat insulating performance x | Heat insulating performance y |
| Floor area size i | A | B |
| Floor area size ii | C | D |
| Floor area size iii | E | F |

In this case, the reference value of the heat demand is set in accordance with the classes A to F below, and therefore, the table in Table 1 can be used as a look up table (LUT) of the reference value of the heat demand. Instead of calculating the reference value on every input, the control variable setting section 22 may read a corresponding class from the LUT, and read the reference value which is set in the relevant class, and therefore, the reference value can be set in a shorter time.

In the example as shown in Table 1, the geographical information includes two regions, i.e., X and Y, and the heat insulating performance x and y are respectively set in the buildings which are located in these regions. Further, the floor area size is classified into three classes, i.e., i to iii, and therefore, the heat demand is classified into six classes, i.e., A to F, and the reference values are set for the classes (see Table 2 described later).

When the reference value of the heat demand is set, the control variable setting section 22 sets the control variable on the basis of the reference value. In the present embodiment, the electric power generation time and the electric power generation start time (the auxiliary control variable) are used in combination as the control variable. Therefore, the control variable setting section 22 may set specific values (setting values) of the electric power generation time and the electric power generation start time from the reference value of the heat demand (step S103).

In the present embodiment, the electric power generation time and the electric power generation start time which are the control variables may also be summarized as an LUT like the classes and reference values of the heat demand, and may be stored to the memory 31. As shown in Table 1, the heat demand is set as six classes, i.e., A to F, and therefore, the electric power generation time and the electric power generation start time may be set as setting values respectively corresponding to these six classes as shown in Table 2 below. In this case, the control variable setting section 22 reads the electric power generation time and the electric power generation start time corresponding to the reference value of the heat demand from the LUT in the memory 31, thus setting these control variables.

**[Table 2]**

| Class | Heat demand (MJ) | Electric power generation time (h) | Electric power generation start time |
|---|---|---|---|
| A | 100 | H1 | T1 |
| B | 90 | H2 | T2 |
| C | 80 | H3 | T3 |
| D | 70 | H4 | T4 |
| E | 60 | H5 | T5 |
| F | 50 | H6 | T6 |

As described above, the control variable setting section 22 sets the reference value of the heat demand from the geographical information and the floor area size which have been input, and sets the electric power generation time and the electric power generation start time, which are the control variables, in accordance with the reference value. Thus, the initial setting processing of the reference value of the heat demand and the control variables is finished. As illustrated in Fig. 2, the control variables which are initially set are output from the control variable setting section 22 to the operation control section 23, and the operation control section 23 performs operation control of the cogeneration device 11A on the basis of the control variable.

It should be noted that the initial setting processing of the reference value of the heat demand and the control variables as illustrated in Fig. 3 is not a requisite processing in the present embodiment. For example, instead of using operation instrument 14 to input the geographical information and the floor area size, a user (or, a person who installs the cogeneration system 10A or a person in charge of maintenance of the cogeneration system 10A) may directly input any one of the classes A to F of the heat demand, or may directly input the reference value of the heat demand (50 to 100 MJ in Table 2). The class or the reference value of the heat demand may be initially set by the controller 20A, and may be changed (reconfigured) in response to input with the operation instrument 14 as necessary.

### [Change processing of control variable and operation stop processing]

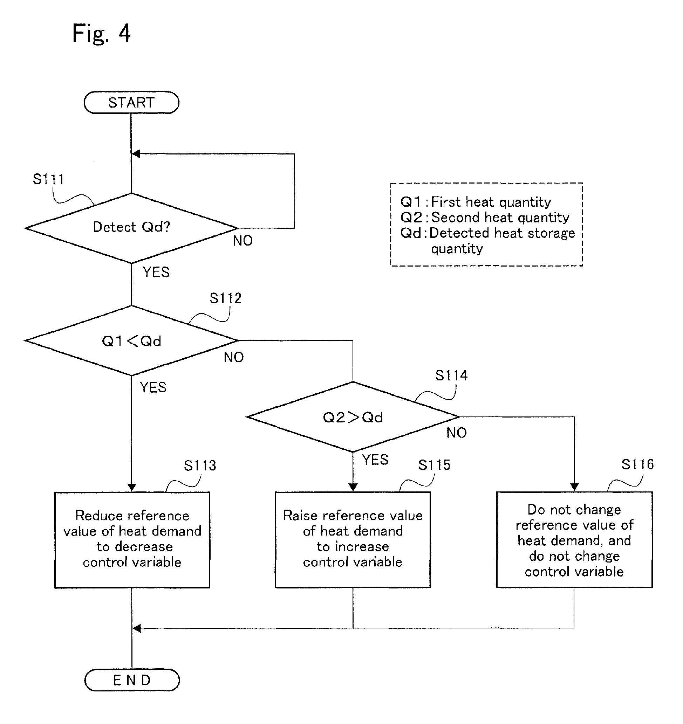

During the operation control, the cogeneration system 10A according to the present embodiment changes (reconfigures) the control variables, which have been initially set as described above, in accordance with the heat storage quantity of the heat accumulator 12. This feature will be described in detail with reference to Fig. 4.

As illustrated in Fig. 4, the change processing of the control variable includes six steps in the present embodiment. While the controller 20A (operation control section 23) performs the operation control of the cogeneration device 11A, the heat quantity detector 13 detects the heat storage quantity of the heat accumulator 12 with a predetermined cycle, and outputs the detected heat storage quantity to the controller 20A. Then, when the controller 20A starts the change processing, the detection heat quantity comparison section 21 determines whether or not the heat quantity detector 13 has detected a heat storage quantity Qd (step S111). When the heat quantity detector 13 has not yet detected the heat storage quantity Qd, this determination is repeated (NO in step S111). When the heat quantity detector 13 has detected the heat storage quantity Qd (YES in step S111), the detection heat quantity comparison section 21 compares the detected heat storage quantity Qd with a first heat quantity Q1 which is the reference heat quantity set in advance (step S112).

This first heat quantity Q1 is a threshold value which is set as the upper limit target value of the heat storage quantity of the heat accumulator 12, and is a reference value for determining whether or not the heat quantity accumulated in the heat accumulator 12 (detected heat storage quantity Qd) is too much. It should be noted that this first heat quantity Q1 is an upper limitation value in terms of operation control of the cogeneration system 10A, and does not mean the limitation value of the upper limit of the heat storage quantity of the heat accumulator 12. Therefore, the specific value of the first heat quantity Q1 can be set appropriately in accordance with a specific configuration of the cogeneration system 10A or conditions, e.g., usage environments.

When the detection heat quantity comparison section 21 determines that the detected heat storage quantity Qd is more than the first heat quantity Q1 (Q1 < Qd) (YES in step S112), the detection heat quantity comparison section 21 outputs the comparison result thereof to the control variable setting section 22. The control variable setting section 22 reduces the reference value of the heat demand so that the corresponding control variable becomes less than the setting value (step S113). More specifically, when Q1 is less than Qd, this means that the heat quantity accumulated in the heat accumulator 12 is too much in terms of control, and therefore, the cogeneration system 10A is regarded as providing heat (and electric power) which is more than the heat demand of the user. Therefore, the reference value of the heat demand is reduced, whereby the control variable is decreased, so that the heat (and electric power) provided by the cogeneration system 10A can be reduced.

In this case, in the present embodiment, as shown in Table 1, the heat demand is classified into six classes, i.e., A to F, and as shown in Table 2, the electric power generation time and the electric power generation start time, which are the control variables, as well as the reference value of the heat demand are set so as to correspond to six heat demand classes. For this reason, when the heat demand class is reduced from the initial class by, e.g., one class, so that the electric power generation time is reduced (shortened). In accordance with the reduction of the electric power generation time, the electric power generation start time which is the auxiliary control variable is also set appropriately.

On the other hand, when the detection heat quantity comparison section 21 determines that the detected heat storage quantity Qd is less than the first heat quantity Q1 (Q1 > Qd) (NO in step S112), the detection heat quantity comparison section 21 further compares the detected heat storage quantity Qd with a second heat quantity Q2 which is another reference heat quantity (step S114). This second heat quantity Q2 is set as the lower limit target value of the heat storage quantity of the heat accumulator 12, and therefore, the second heat quantity Q2 becomes a value less than the first heat quantity Q1. The second heat quantity Q2 is a reference value (threshold value) for determining whether or not the heat quantity (detected heat storage quantity Qd) accumulated in the heat accumulator 12 is too little, and like the first heat quantity Q1, the second heat quantity Q2 does not mean the limitation value of the lower limit of the heat storage quantity of the heat accumulator 12. Therefore, the specific value of the second heat quantity Q2 can be set appropriately in accordance with a specific configuration of the cogeneration system 10A or conditions, e.g., usage environments.

When the detection heat quantity comparison section 21 determines that the detected heat storage quantity Qd is less than the second heat quantity Q2 (Q2 > Qd) (YES in step S114), the detection heat quantity comparison section 21 outputs the comparison result thereof to the control variable setting section 22. The control variable setting section 22 increases the reference value of the heat demand, so that the corresponding control variable becomes more than the setting value (step S115). More specifically, when Q2 is more than Qd, this means that the heat quantity accumulated in the heat accumulator 12 is too little in terms of control, and therefore, the heat (and the electric power) provided by the cogeneration system 10A is regarded as not sufficiently satisfying the heat demand of the user. Therefore, the reference value of the heat demand is increased to raise the control variable (the electric power generation time is increased, and the electric power generation start time is set to be earlier), so that the heat supply (and the electric power supply) performed by the cogeneration system 10A can be promoted.

On the other hand, when the detection heat quantity comparison section 21 determines that the detected heat storage quantity Qd is more than the second heat quantity Q2 (Q2 < Qd) (NO in step S114), the heat storage quantity of the heat accumulator 12 is less than the first heat quantity Q1 which is the upper limit target value, but is more than the second heat quantity Q2 which is the lower limit target value (Q1 > Qd > Q2). More specifically, the comparison result indicating Q1 > Qd > Q2 means that the heat (and the electric power) provided by the cogeneration system 10A is within a preferable range. Therefore, the control variable setting section 22 maintains the reference value of the heat demand without changing the reference value of the heat demand, and therefore, the control variable setting section 22 also maintains the electric power generation time and the electric power generation start time which are the control variables (step S116).

Then, when the control variable setting section 22 determines to change the control variables (steps S113, S115) or determines to maintain the control variables without changing the control variables (step S116), then, the change processing of the control variable is terminated.

As described above, the heat quantity detector 13 is configured to estimate the heat storage quantity in the heat accumulator 12 on the basis of the temperature and the amount of the heat medium flowing in the first circuit 15. For this reason, for example, in a case where the heat medium flowing in the first circuit 15 is water at a normal temperature which is provided directly from tap water, the temperature of the water at a normal temperature is measured even if the heat is accumulated in the heat accumulator 12. Therefore, the heat quantity detector 13 may estimate the heat quantity greatly less than the heat quantity actually accumulated in the heat accumulator 12.

In this case, the determination in step S114 (whether or not the heat storage quantity Qd is less than the second heat quantity Q2) may not be performed appropriately. Accordingly, in the present embodiment, the heat accumulator 12 may be provided with a temperature sensor such as a thermistor, not illustrated, separately from the heat quantity detector 13 provided in the first circuit 15. More specifically, a temperature sensor for the purpose of detecting whether or not the heat storage quantity Qd is less than the second heat quantity Q2 may be provided on the heat accumulator 12. The temperature sensor provided to detect whether or not the temperature is equal to or more than the second heat quantity Q2 also functions as "heat quantity detector" like the heat quantity detector 13 provided on the first circuit 15.

When the heat accumulator 12 is provided with a few temperature sensors (for example, one to three temperature sensors, and more preferably one temperature sensor), the number of temperature sensors is less than a generally available heat accumulator (for example, five to seven temperature sensors are provided), and therefore, the heat quantity provided from the heat accumulator 12 to the heat load cannot be sufficiently found out. However, even with a few temperature sensors, the controller 20A can determine, on the basis of the output from the few temperature sensors, that the heat quantity accumulated in the heat accumulator 12 is less than the second heat quantity Q2.

On the other hand, even in this case, the temperature sensor provided on the heat accumulator 12 is difficult to detect whether or not the heat equal to or more than the first heat quantity Q1 is stored in the heat accumulator 12. This is because, the first heat quantity Q1 is the upper limitation value in terms of the operation control of the cogeneration system 10A as described above. More specifically, the first heat quantity Q1 is the heat quantity when the heat accumulator 12 stores the heat up to almost the upper limitation value, and therefore, the temperature sensor for detecting whether or not the heat quantity is equal to or more than the first heat quantity Q1 is disposed at a position completely different from the position of the temperature sensor for detecting whether or not the heat quantity is equal to or more than the second heat quantity Q2.

More specifically, for example, when the heat accumulator 12 is a hot water storage tank, hot water is accumulated from the top of the hot water storage tank. For this reason, a temperature sensor needs to be provided at the lowermost portion of the hot water storage tank in order to measure the first heat quantity Q1, and a temperature sensor needs to be provided at the upper portion of the hot water storage tank in order to measure the second heat quantity Q2.

Needless to say, depending on the magnitude of the second heat quantity Q2, the estimation performance of the heat quantity detector 13, the determination performance of the controller 20A, the configuration for providing tap water, the configuration of the hot water storage tank which is an example of the heat accumulator 12, and the like, the determination in step S114 can be made with only the heat quantity detector 13 even without any temperature sensor provided on the heat accumulator 12. The position where the temperature sensor is installed in the heat accumulator 12 is not particularly limited, and the temperature sensor may be installed at a publicly known position in accordance with the specific type and the like of the heat accumulator 12.

In this case, the change processing of the control variable as illustrated in Fig. 4 (which will be referred to as "first change processing of the control variable" for the sake of convenience of description) is done with a predetermined cycle during operation of the cogeneration device 11A. In the present embodiment, this predetermined cycle is set to, e.g., every minute according to the cycle of the detection of the heat storage quantity of the heat quantity detector 13, but as a matter of course the predetermined cycle is not limited thereto. As long as the control variable can be changed or maintained in accordance with the heat demand, the first change processing may be done with a longer cycle, or may be done with a shorter cycle.

The first change processing as illustrated in Fig. 4 is not limited to the case where the first change processing is done with a cycle. For example, the number of times the heat storage quantity becomes more than the first heat quantity Q1 or becomes less than the second heat quantity Q2 within the unit time (the number of times the heat storage quantity becomes inappropriate) may be stored to the memory 31, and when the number of times the heat storage quantity becomes inappropriate is equal to or more than a predetermined number within the unit time, the control variable setting section 22 may change the control variable. At this occasion, the predetermined number of times may be one or more, and can be set appropriately in accordance with a specific configuration of the cogeneration system 10A or conditions, e.g., usage environment and the like.

As described above, in the present embodiment, the control variable according to the heat demand is set in advance, and the heat quantity accumulated in the heat accumulator 12 (heat storage quantity) is detected instead of the heat quantity provided from the heat accumulator 12 to the heat load, and the detected heat quantity is used for changing (reconfiguring) the control variable. Therefore, even when the heat quantity provided from the heat accumulator 12 to the heat load cannot be found out sufficiently, the cogeneration device 11A can be caused to operate according to the heat demand of the user by just changing the control variable according to the change in the heat storage quantity. As a result, with simple computation processing, the operation of the cogeneration device 11A can be controlled with the electric power generation amount suitable for the building where the cogeneration system 10A is provided.

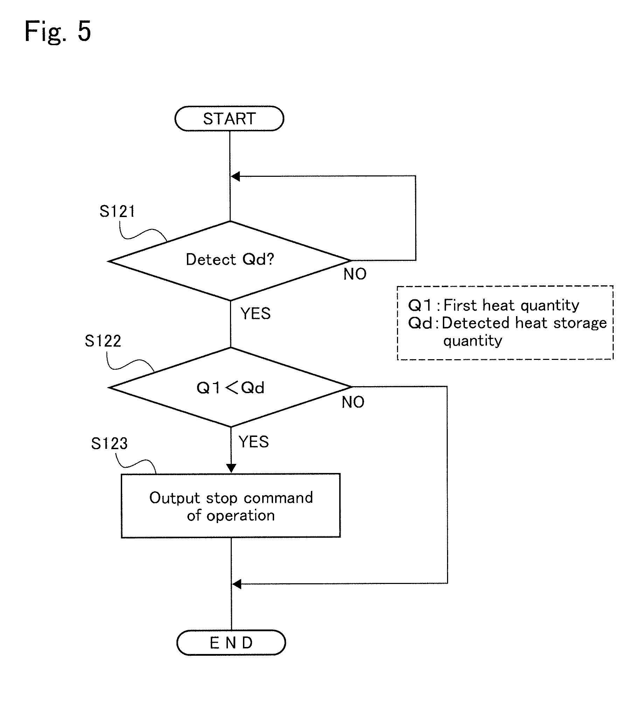

Further, in the present embodiment, in parallel with the first change processing of the control variable as illustrated in Fig. 4, the controller 20A also performs the operation stop processing for stopping the cogeneration device 11A in accordance with the detected heat storage quantity Qd. This operation stop processing will be described in detail with reference to Fig. 5.

When the heat storage quantity of the heat accumulator 12 is beyond the limitation in the cogeneration system 10A, the system itself may malfunction. Therefore, in the present embodiment, for example, the first heat quantity Q1 may be adopted as the standard of the limitation of the heat storage quantity, and the operation stop processing for stopping the cogeneration device 11A may be preferably done.

As illustrated in Fig. 5, this operation stop processing includes three steps in the present embodiment. When the controller 20A starts the operation stop processing, the detection heat quantity comparison section 21 determines whether or not the heat quantity detector 13 detects the heat storage quantity Qd (step S121). When the heat quantity detector 13 does not detect the heat storage quantity Qd, this determination is repeated (NO in step S121), and when the heat quantity detector 13 detects the heat storage quantity Qd (YES in step S121), the detection heat quantity comparison section 21 compares the detected heat storage quantity Qd with the first heat quantity Q1 which is the reference heat quantity set in advance (step S122). The process up to this comparison is the same as the first change processing as illustrated in Fig. 4.

When the detection heat quantity comparison section 21 determines that the detected heat storage quantity Qd is less than the first heat quantity Q1 (NO in step S122), the operation stop processing is terminated. When the detection heat quantity comparison section 21 determines that the detected heat storage quantity Qd is more than the first heat quantity Q1 (YES in step S122), the stop command of the operation is output to the operation control section 23 (step S123). The operation control section 23 stops the operation of the cogeneration device 11A in response to the stop command, and therefore, the operation stop processing is terminated.

Like the first change processing of the control variable, this operation stop processing is performed with a predetermined cycle during the operation of the cogeneration device 11A. This predetermined cycle may be set to, e.g., every minute as described above, but as a matter of course the predetermined cycle is not limited thereto.

As described above, the operation stop processing is performed while the first heat quantity Q1 which is the upper limit target value of the heat storage quantity is adopted as the reference, so that, for example, even in a case where the measurement instrument cannot be provided on the heat accumulator 12, a determination can be made as to whether or not the limitation of the heat storage quantity that can be accumulated in the heat accumulator 12 has been attained by the electric power generation of the cogeneration device 11A. Then, when the limitation of the heat storage quantity has been attained, the cogeneration device 11 A can be stopped without relying on the operation command given by the operation instrument 14 and the like.

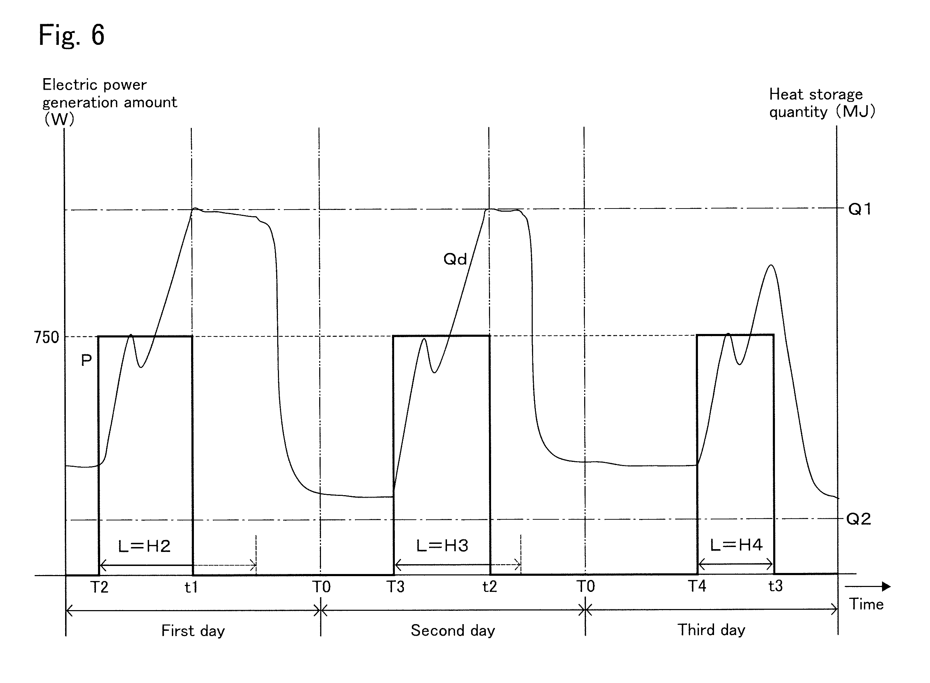

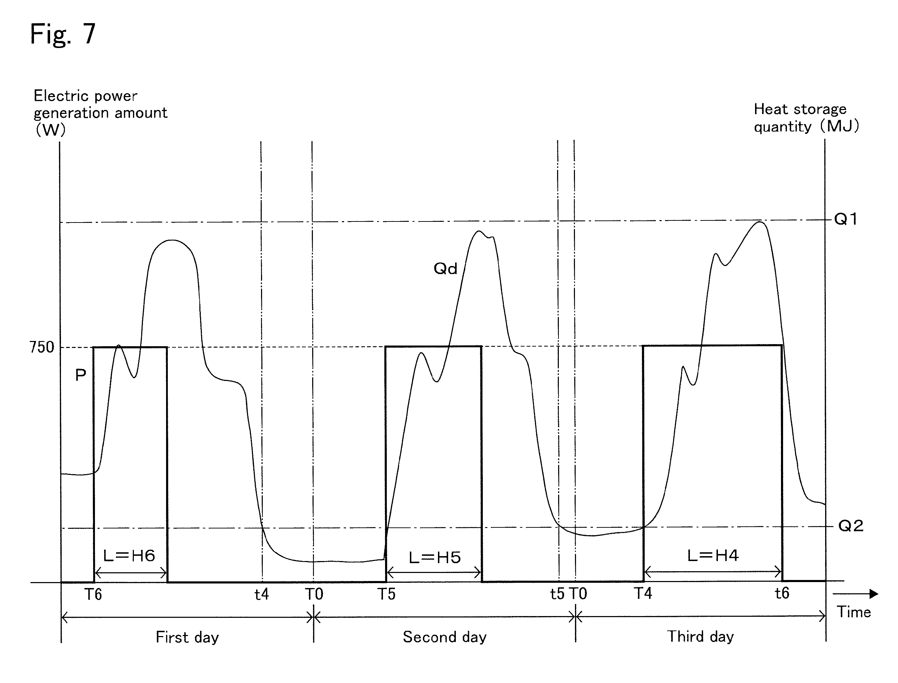

[Operation control processing of cogeneration system] Subsequently, an example of operation control processing performed by the cogeneration system 10A according to the present embodiment will be described in detail with reference to not only Figs. 1 to 4 but also Figs. 6 and 7.

Figs. 6 and 7 are time charts illustrating change of the electric power generation amount and the heat storage quantity of the cogeneration system 10A over time. Among them, Fig. 6 illustrates a time chart in a case where the detected heat storage quantity Qd is more than the first heat quantity Q1. Fig. 7 illustrates a time chart in a case where the detected heat storage quantity Qd is less than the second heat quantity Q2.

In Figs. 6 and 7, a thick line P indicates the change of the actual electric power generation amount of the cogeneration system 10A over time, and a thin line Qd indicates the heat storage quantity detected by the heat quantity detector 13 over time. In the examples of Figs. 6 and 7, the unit time is one day (24 hours), and the start time of the unit time is denoted as T0 in the figures. More specifically, at the time T0, the unit time (one day) changes, and therefore the period before the time T0 is a previous unit time (previous day), and the period after the time T0 is the present unit time (today).

In Figs. 6 and 7, moreover, the electric power generation time is denoted as "L", and for the sake of clearly distinguishing "the electric power generation time serving as the control variable" and "the length of the actual electric power generation time" from each other in the description about Figs. 6 and 7, the "L" is used to indicate that, for example, "the electric power generation time (serving as the control variable) L = (the length of the actual electric power generation time) H2" in the description below. Likewise, for the sake of clearly distinguishing the "time" indicating the elapse of the time and the "electric power generation start time" from each other, the "time" in its literal sense is denoted as "Tc", and for example, the following descriptions are used, "time Tc = T0" or "time Tc = electric power generation start time T2".

First, the example as illustrated in Fig. 6 will be described. When, for example, "the region Y" (see Table 1) is input from the operation instrument 14 as geographical information, and the "floor area size i" (see Table 1) is input as the floor area size (step S101 of Fig. 3), the control variable setting section 22 reads and sets the value which is set in the class B as the reference value of the heat demand (90 MJ) from the LUT (Table 1) of the heat demand stored in the memory 31 (step S102 of Fig. 3). Since the memory 31 also stores the LUT (Table 2) of the control variables, the control variable setting section 22 reads the electric power generation time L = H2 and the electric power generation start time T2 which correspond to the heat demand of the class B (90 MJ) from the memory 31, and sets them as the control variables, and outputs the control variables to the operation control section 23 (step S103 of Fig. 3).

The operation control section 23 controls operation of the cogeneration system 10A (cogeneration device 11A) on the basis of the electric power generation time L = H2 and the time Tc = the electric power generation start time T2. Therefore, as illustrated in Fig. 6, the cogeneration device 11A starts electric power generation at the time Tc = T2, and therefore, unless there is a change in the electric power generation time which is the control variable, the cogeneration device 11A continues electric power generation at a rated electric power 750 W during the electric power generation time L = H2. In addition, the heat medium passes through the first circuit 15 and the second circuit 16, and accordingly, the heat generated by the cogeneration device 11A is accumulated in the heat accumulator 12 (see Fig. 1).

During the operation of the cogeneration system 10A, the heat quantity detector 13 detects the heat storage quantity of the heat accumulator 12 with a cycle (for example, every minute), and outputs the detection result (detected heat storage quantity Qd) to the detection heat quantity comparison section 21 of the controller 20A (see Fig. 2, step S111 of Fig. 4, and step S121 of Fig. 5). In this case, as illustrated in Fig. 6, for example, suppose that, at the time Tc = t1 (during the electric power generation time L = H2), the detection heat quantity comparison section 21 obtains the comparison result indicating that the detected heat storage quantity Qd is more than the first heat quantity Q1 (step S112 of Fig. 4, and step S122 of Fig. 5). This comparison result is input into the control variable setting section 22 (see Fig. 2), and accordingly, the control variable setting section 22 reduces the heat demand from the class B to the class C. Accordingly, the reference value of the heat demand is also reduced (from 90 MJ to 80 MJ), and therefore, the electric power generation time which is the control variable is shortened from L = H2 to L = H3, and according to this shortened electric power generation time, the electric power generation start time is changed from Tc = T2 to Tc = T3 (step S 112 of Fig. 4).

Therefore, in the example as illustrated in Fig. 6, the detected heat storage quantity Qd is more than the first heat quantity Q1 during the electric power generation time L = H2 in the first unit time (the first day), and therefore, the operation control section 23 stops the operation of the cogeneration device 11 A (step S123 of Fig. 5). Accordingly, the electric power generation amount P of Fig. 6 becomes 0 W. Thereafter, in the subsequent unit time (the second day), the operation control section 23 starts the operation of the cogeneration device 11A from the time Tc = electric power generation start time T3 in accordance with the control variable that has been changed by the control variable setting section 22, and thereafter, the operation control section 23 performs the control so as to continue the operation until the electric power generation time L = H3 elapses.

In this case, as illustrated in Fig. 6, for example, suppose that, at the time Tc = t2 (during the electric power generation time L = H3), the detection heat quantity comparison section 21 obtains the comparison result again, which indicates that the detected heat storage quantity Qd is more than the first heat quantity Q1 (step S112 of Fig. 4, and step S122 of Fig. 5). This comparison result is input into the control variable setting section 22 (see Fig. 2), and therefore, the control variable setting section 22 further reduces the heat demand from the class C to the class D. Accordingly, the reference value of the heat demand also decreases (from 80 MJ to 70 MJ), and therefore, the electric power generation time which is the control variable is shortened from L = H3 to L = H4, and according to the shortened electric power generation time, the electric power generation start time is changed from Tc = T3 to Tc = T4 (step S113 of Fig. 4).

Therefore, in the example as illustrated in Fig. 6, during the electric power generation time L = H3 in the subsequent unit time (the second day), the detected heat storage quantity Qd becomes more than the first heat quantity Q1, and therefore, the operation control section 23 stops the operation of the cogeneration device 11A (step S123 of Fig. 4). Accordingly, the electric power generation amount P of Fig. 6 becomes 0 W. Thereafter, in the subsequent unit time (the third day), the operation control section 23 starts the operation of the cogeneration device 11A from the time Tc = the electric power generation start time T4 in accordance with the control variables changed by the control variable setting section 22, and thereafter, the operation control section 23 performs control so as to continue the operation until the electric power generation time L = H4 elapses.

In the example as illustrated in Fig. 6, the detected heat storage quantity Qd is not more than the first heat quantity Q1 at the third day, and therefore, the operation state of the cogeneration system 10A may be said to be the state for providing almost as much heat as the heat demand of the user (energy consumption quantity). Therefore, the control variable setting section 22 maintains the electric power generation time and the electric power generation start time which are the control variables, as they are, without changing the electric power generation time and the electric power generation start time. Therefore, the operation control section 23 continues the operation until the electric power generation time L = H4 elapses, i.e., until the time Tc = t3 as indicated in Fig. 6.

Subsequently, the example as illustrated in Fig. 7 will be described. For example, when "the region Y" (see Table 1) is input as the geographical information from the operation instrument 14, and the "floor area size iii" (see Table 1) is input as the floor area size (step S101 of Fig. 3), then the control variable setting section 22 reads and sets the value which is set in the class F as the reference value of the heat demand (50 MJ) from the LUT of the heat demand stored in the memory 31 (Table 1) (step S 102 of Fig. 3). Thereafter, the control variable setting section 22 reads the electric power generation time L = H6 and the electric power generation start time T6 corresponding to the heat demand (50 MJ) of the class F from the memory 31, and sets the electric power generation time L = H6 and the electric power generation start time T6 as the control variables, and outputs the control variables to the operation control section 23 (step S103 of Fig. 3).

As illustrated in Fig. 7, with the operation control section 23, the cogeneration device 11A starts electric power generation at the time Tc = T6, and continues the electric power generation at the rated electric power 750 W during the electric power generation time L = H6. Thereafter, when the electric power generation time L = H6 elapses, and the cogeneration device 11A stops, and then the electric power generation amount P becomes 0 W. At this occasion, even when the cogeneration device 11A is at a stop, the heat quantity detector 13 detects the heat storage quantity of the heat accumulator 12 with a cycle, and outputs the detection result (detected heat storage quantity Qd) to the detection heat quantity comparison section 21 of the controller 20A (see Fig. 2).

Then, for example, suppose that, during the time Tc = t4 in which the electric power generation is at a stop, the comparison result is obtained which indicates that the heat storage quantity Qd detected by the detection heat quantity comparison section 21 is less than the second heat quantity Q2 (step S114 of Fig. 4). This comparison result is input into the control variable setting section 22 (see Fig. 2), and therefore, the control variable setting section 22 raises the heat demand from the class F to the class E. Accordingly, the reference value of the heat demand also increases (increases from 50 MJ to 60 MJ), and therefore, the electric power generation time which is the control variable is extended from L = H6 to L = H5, and in accordance with the extension of the electric power generation time, the electric power generation start time changes from Tc = T6 to Tc = T5 (step S115 of Fig. 4).

Therefore, in the example as illustrated in Fig. 7, at the first unit time (the first day), the detected heat storage quantity Qd becomes less than the second heat quantity Q2 after the electric power generation time L = H6 has elapsed (while the cogeneration device 11A is at a stop). Therefore, at the subsequent unit time (the second day), the operation control section 23 starts the operation of the cogeneration device 11A from the time Tc = the electric power generation start time T5 in accordance with the control variables changed by the control variable setting section 22, and thereafter, the operation control section 23 performs the control so as to continue the operation until the electric power generation time L = H5 elapses.

Further, as illustrated in Fig. 7, after the electric power generation time L = H5 elapses, suppose that, at the time Tc = t5 which is almost the end of the unit time, the detection heat quantity comparison section 21 obtains again the comparison result indicating that the detected heat storage quantity Qd is more than the first heat quantity Q1 (step S114 of Fig. 4). This comparison result is input into the control variable setting section 22 (see Fig. 2), and therefore, the control variable setting section 22 further raises the heat demand from the class E to the class D. Accordingly, the reference value of the heat demand also increases (increases from 60 MJ to 70 MJ), and therefore, the electric power generation time which is the control variable is extended from L = H5 to L = H4, and in accordance with the extension of this electric power generation time, the electric power generation start time is changed from Tc = T5 to Tc = T4 (step S115 of Fig. 4).

Therefore, in the example as illustrated in Fig. 7, in the subsequent unit time (the second day), when the electric power generation time L = H5 elapses, and a moment before the unit time finishes (the second day ends), the detected heat storage quantity Qd becomes more than the second heat quantity Q2. Therefore, in the subsequent unit time (the third day), the operation control section 23 starts the operation of the cogeneration device 11A from the time Tc = the electric power generation start time T4 in accordance with the control variables changed by the control variable setting section 22, and thereafter, the operation control section 23 performs control so as to continue the operation until the electric power generation time L = H4 elapses.

In the example as illustrated in Fig. 7, the detected heat storage quantity Qd does not become less than the second heat quantity Q2 either in the third day, and therefore, the operation state of the cogeneration system 10A may be said to be the state for providing almost as much heat as the heat demand of the user (energy consumption quantity). Therefore, the control variable setting section 22 maintains the electric power generation time and the electric power generation start time which are the control variables, as they are, without changing the electric power generation time and the electric power generation start time. Therefore, the operation control section 23 continues the operation until the electric power generation time L = H4 elapses, i.e., until the time Tc = t6 as indicated in Fig. 7.

As described above, according to the present embodiment, the reference value of the heat demand (energy consumption quantity) is set from the geographical information and the floor area size, and a determination is made as to whether the actual heat consumption (energy consumption) is lower or higher than the heat demand, and the control variables (the electric power generation time and the electric power generation start time in the present embodiment) are changed (reconfigured) on the basis of the determination result.

Therefore, this configuration prevents the heat accumulator 12 from excessively accumulating the remaining heat quantity that is not consumed when the actual heat consumption is low. When then actual heat consumption is high, the cogeneration device 11A is caused to operate, and the insufficient heat quantity is added to the heat accumulator 12 in a supplemental manner. Therefore, according to the present embodiment, even when the measurement performance of the heat accumulator 12 is insufficient and the heat consumption quantity of the heat load cannot be correctly found out, the cogeneration system 10A can achieve operation closely suitable for the user's heat demand using the simple computation processing while suppressing the increase in the computation time and the increase in the storage capacity.

In the cogeneration system 10A according to the present embodiment, the operation is controlled so as to activate the cogeneration system 10A once and stop the cogeneration system 10A once in the unit time (for example, one day), but even in such limited operation, the energy efficiency of the cogeneration system 10A can be improved.

Further, when the detected heat storage quantity Qd is more than the first heat quantity Q1, the cogeneration system 10A according to the present embodiment stops the cogeneration device 11A, but because of this, even when any measurement instrument such as a temperature sensor cannot be arranged in the heat accumulator 12, a determination is made as to whether or not the limit of the heat storage quantity that can be accumulated in the heat accumulator 12 by the operation of the cogeneration device 11A is almost attained using the detected heat storage quantity Qd as the reference, and accordingly, the cogeneration device 11A can be stopped. Therefore, the reliability of the cogeneration system 10A can be improved.

### (Embodiment 2)

In an embodiment 2 of the present invention, basically, the same configuration as that of the cogeneration system 10A according to the embodiment 1 is used, but the embodiment 2 of the present invention is different from the embodiment 1 in that an electric power generation amount is used instead of the electric power generation time as the control variable. Like the embodiment 1, the electric power generation start time is used as the auxiliary control variable. The specific configuration of the cogeneration system 10A has already described in the embodiment 1, and therefore, in the present embodiment, the description thereabout is omitted.

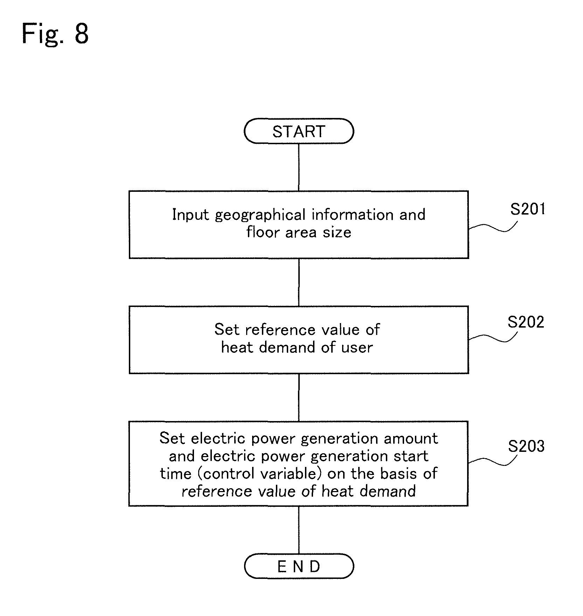

[Control variable and initial setting processing thereof] With reference to Fig. 8 (and Fig. 2), description will first be given of, in the cogeneration system 10A according to the present embodiment, initial setting processing of the reference value of the heat demand and the control variables performed by a control variable setting section 22.

As illustrated in Fig. 8, like the embodiment 1, this setting processing includes three steps in the present embodiment. First, the cogeneration system 10A includes an operation instrument 14, and therefore, when a controller 20A starts the initial setting processing, a user (or, a person who installs the cogeneration system 10A or a person in charge of maintenance of the cogeneration system 10A) uses the operation instrument 14 to input the geographical information and the floor area size of the building where the cogeneration system 10A is installed (step S201). The information is output to the control variable setting section 22 of the controller 20A (see Fig. 2).

The control variable setting section 22 refers to the geographical information stored in a memory 31 to collate the geographical information which is input from the operation instrument 14, determines the heat insulating performance of the building, and sets the reference value of the heat demand from the heat insulating performance and the floor area size which has been input (step S202).

When the reference value of the heat demand is set, the control variable setting section 22 sets the control variables on the basis of the reference value. In the present embodiment, as the control variables (in the broad sense), the electric power generation amount (the control variable in the narrow sense) and the electric power generation start time (auxiliary control variable) are used in combination. Therefore, the control variable setting section 22 sets the specific values (the setting values) of the electric power generation amount and the electric power generation start time from the reference value of the heat demand (step S203), and terminates the initial setting processing.

Also in the present embodiment, the electric power generation amount and the electric power generation start time which are the control variables may be summarized as an LUT, and may be stored in the memory 31. As shown in Table 1 in the embodiment 1, the heat demand is set as six classes, i.e., A to F. Accordingly, as shown in Table 3 below, the electric power generation amount and the electric power generation start time as well as the reference value of the heat demand may be set as the setting values respectively corresponding to these six classes. In this case, the control variable setting section 22 reads the electric power generation amount and the electric power generation start time corresponding to the reference value of the heat demand from the LUT of the memory 31, thus setting these control variables.

**[Table 3]**

| Class | Heat demand (MJ) | Electric power generation amount (W) | Electric power generation start time |
|---|---|---|---|
| A | 100 | 750 | T7 |
| B | 90 | 700 | T8 |
| C | 80 | 650 | T9 |
| D | 70 | 600 | T10 |
| E | 60 | 500 | T11 |
| F | 50 | 450 | T12 |

As described above, the control variable setting section 22 sets the reference value of the heat demand from the geographical information and the floor area size which has been input, and sets the electric power generation amount and the electric power generation start time, which are the control variables, in accordance with the reference value. Thus, the initial setting processing of the control variables is finished. The control variables which are initially set are output from the control variable setting section 22 to the operation control section 23, and the operation control section 23 performs operation control of the cogeneration device 11A on the basis of the control variable (see Fig. 2).

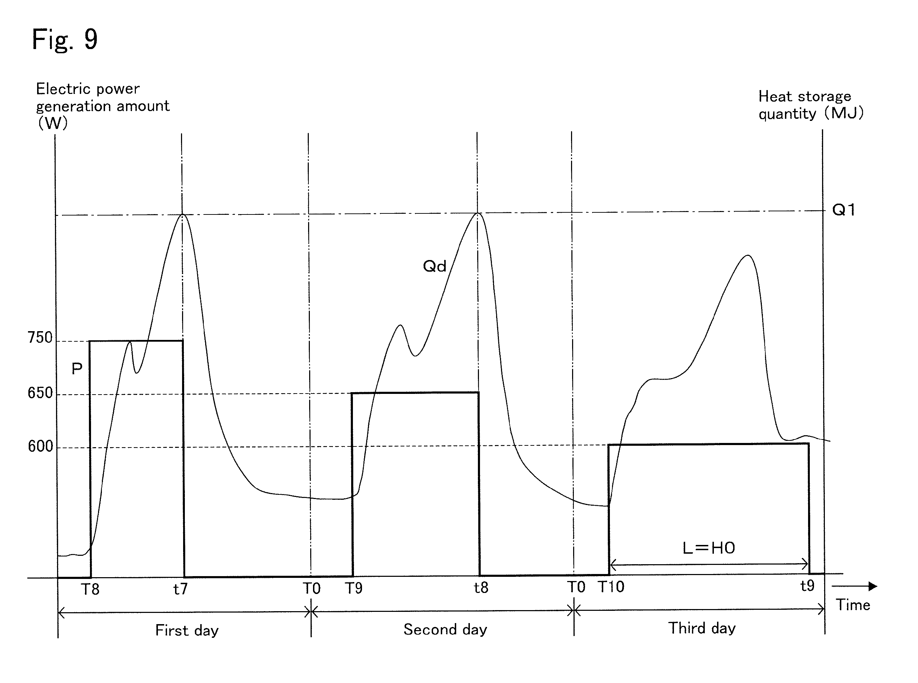

[Operation control processing of cogeneration system] Subsequently, an example of operation control processing performed by the cogeneration system 10A according to the present embodiment will be described in detail with reference to Fig. 9 (and Figs. 1 and 2). Fig. 9 is a time chart illustrating change of the electric power generation amount and the heat storage quantity of the cogeneration system 10A over time. A thick line P, a thin line Qd, time T0, and time L in Fig. 9 are the same as those in the time chart of Figs. 6 and 7, and therefore, description thereabout is omitted.

The present embodiment is the same as the embodiment 1 in that a "time" in its literal sense is denoted as "Tc", but in the present embodiment, the control variable is not the electric power generation time but is the electric power generation amount, and therefore, for the sake of clearly distinguishing "the electric power generation amount serving as the control variable" and "the magnitude of the actual electric power generation amount " from each other, "P" indicating the electric power generation amount is used to indicate that, for example, "the electric power generation amount P (serving as the control variable) = (the magnitude of the actual electric power generation amount) 700 W" in the description below.

In the embodiment 1, the control variable is the electric power generation time. Thus, the electric power generation time is changeable, and therefore the electric power generation amount P is fixed at 750 W. In contrast, in the present embodiment, the control variable is the electric power generation amount. Thus, the electric power generation time is fixed at the time L = H0 which is set in advance, and the electric power generation amount is changeable.

When, for example, "the region Y" (see Table 1) is input from the operation instrument 14 as geographical information, and the "floor area size i" (see Table 1) is input as the floor area size, the control variable setting section 22 reads and sets the value which is set in the class B as the reference value of the heat demand (90 MJ) from the LUT (Table 1) of the heat demand stored in the memory 31. Since the memory 31 also stores the LUT (Table 3) of the control variables, the control variable setting section 22 reads the electric power generation amount L = 700 W and the electric power generation start time T8 corresponding to the heat demand of the class B (90 MJ) from the memory 31 and sets them as the control variables (initial setting processing as illustrated in Fig. 8), and outputs the control variables to the operation control section 23 (see Fig. 2).

The operation control section 23 controls operation of the cogeneration system 10A (cogeneration device 11A) on the basis of the electric power generation amount P = 700 W and the time Tc = electric power generation start time T8. Therefore, as illustrated in Fig. 9, the cogeneration device 11A starts the electric power generation at the time Tc = T8. In addition, the heat medium passes through the first circuit 15 and the second circuit 16, and accordingly, the heat generated by the cogeneration device 11A is accumulated in the heat accumulator 12 (see Fig. 1).

During the operation of the cogeneration system 10A, the heat quantity detector 13 detects the heat storage quantity of the heat accumulator 12 with a cycle (for example, every minute), and outputs the detection result (detected heat storage quantity Qd) to the detection heat quantity comparison section 21 of the controller 20A (see Fig. 2). In this case, as illustrated in Fig. 9, for example, suppose that, at the time Tc = t7 (during the fixed electric power generation time L = H0), the detection heat quantity comparison section 21 obtains the comparison result indicating that the detected heat storage quantity Qd is more than the first heat quantity Q1. This comparison result is input into the control variable setting section 22 (see Fig. 2), and accordingly, the control variable setting section 22 reduces the heat demand from the class B to the class C. Accordingly, the reference value of the heat demand is also reduced (from 90 MJ to 80 MJ), and therefore, the electric power generation amount which is the control variable is reduced from P = 700 W to P = 650 W, and according to the reduction of the electric power generation amount, the electric power generation start time is changed from Tc = T8 to Tc = T9 (the first change processing of the control variable as illustrated in Fig. 4).

Therefore, in the example as illustrated in Fig. 9, the detected heat storage quantity Qd is more than the first heat quantity Q1 at the time Tc = t7 during the electric power generation with the electric power generation amount P = 700 W in the first unit time (the first day). Therefore, the operation control section 23 stops the operation of the cogeneration device 11A at this time t7 (the operation stop processing as illustrated in Fig. 5). Accordingly, the electric power generation amount P of Fig. 9 becomes 0 W. Thereafter, in the subsequent unit time (the second day), the operation control section 23 starts the operation of the cogeneration device 11A from the time Tc = the electric power generation start time T9 in accordance with the control variable that has been changed by the control variable setting section 22. Then, the operation is continued with the output of the electric power generation amount P = 650 W until the fixed electric power generation time L = H0 elapses.

In this case, as illustrated in Fig. 9, for example, suppose that, at the time Tc = t8 (during the fixed electric power generation time L = H0), the detection heat quantity comparison section 21 obtains the comparison result again, which indicates that the detected heat storage quantity Qd is more than the first heat quantity Q1. This comparison result is input into the control variable setting section 22 (see Fig. 2), and therefore, the control variable setting section 22 further reduces the heat demand from the class C to the class D. Accordingly, the reference value of the heat demand also decreases (from 80 MJ to 70 MJ), and therefore, the electric power generation amount which is the control variable is reduced from P = 650 W to P = 600 W, and according to the reduction of the electric power generation amount, the electric power generation start time is changed from Tc = T9 to Tc = T10 (the first change processing of the control variable as illustrated in Fig. 4).

Therefore, in the example as illustrated in Fig. 9, at the time Tc = t8 during the electric power generation with the electric power generation amount P = 650 W in the subsequent unit time (the second day), the detected heat storage quantity Qd becomes more than the first heat quantity Q1, and therefore, the operation control section 23 stops the operation of the cogeneration device 11A at this time t8 (the operation stop processing as illustrated in Fig. 5). Accordingly, the electric power generation amount P of Fig. 9 becomes 0 W. Thereafter, in the subsequent unit time (the third day), the operation control section 23 starts the operation of the cogeneration device 11A from the time Tc = the electric power generation start time T10 in accordance with the control variables changed by the control variable setting section 22. Then, the operation control section 23 performs control so as to continue the operation with the output of the electric power generation amount P = 600 W until the fixed electric power generation time L = H0 elapses.

In the example as illustrated in Fig. 9, the detected heat storage quantity Qd is not more than the first heat quantity Q1 at the third day, and therefore, the operation state of the cogeneration system 10A may be said to be the state for providing almost as much heat as the heat demand of the user (energy consumption quantity). Therefore, the control variable setting section 22 maintains the electric power generation amount and the electric power generation start time which are the control variables, as they are, without changing the electric power generation amount and the electric power generation start time. Therefore, the operation control section 23 continues the operation with the electric power generation amount P = 600 W until the fixed electric power generation time L = H0 elapses, i.e., until the time Tc = t9 as indicated in Fig. 9.

As described above, according to the present embodiment, the reference value of the heat demand (energy consumption quantity) is set from the geographical information and the floor area size, a determination is made as to whether the actual heat consumption (energy consumption) is lower or higher than the heat demand, and the control variables (the electric power generation amount and the electric power generation start time in the present embodiment) are changed (reconfigured) on the basis of the determination result.

Therefore, this configuration prevents the heat accumulator 12 from excessively accumulating the remaining heat quantity that is not consumed when the actual heat consumption is low. When then actual heat consumption is high, the cogeneration device 11A is caused to operate, and the insufficient heat quantity is added to the heat accumulator 12 in a supplemental manner. Therefore, according to the present embodiment, even when the heat accumulator 12 does not have any measurement instrument such as a flowmeter and a thermistor, the cogeneration system 10A can achieve operation closely suitable for the user's heat demand.

[Modification] In the present embodiment 2 and the embodiment 1, when the detected heat storage quantity Qd is more than the first heat quantity Q1, the controller 20A performs the first change processing of the control variable as illustrated in Fig. 4 as well as the operation stop processing as illustrated in Fig. 5, but the present invention is not limited thereto. For example, the first change processing may be performed, but the operation stop processing may not be performed. More specifically, the detection heat quantity comparison section 21 may not be configured to generate the stop command.

Since the first heat quantity Q1 may be the upper limit target value of the heat storage quantity, it is not necessary to set the limitation value of the heat storage quantity of the heat accumulator 12. For this reason, when, for example, the limitation value of the heat accumulator 12 (the allowable value of the heat storage) is a value larger than the first heat quantity Q1, it is not necessary to stop the cogeneration device 11A even if the heat storage quantity of the heat accumulator 12 is more than the first heat quantity Q1. Therefore, in this case, the cogeneration device 11A may continue the operation until the electric power generation time L = H0 elapses. Alternatively, after the heat storage quantity of the heat accumulator 12 becomes more than the first heat quantity Q1, the operation control section 23 may perform the control so as to continue the operation of the cogeneration device 11A, not until the electric power generation time elapses but for a predetermined period of time which has been set in advance.

In both the present embodiment 2 and the embodiment 1, the controller 20A performs the first change processing of the control variable as illustrated in Fig. 4, and therefore, the detected heat storage quantity Qd is set such that a range equal to or more than the second heat quantity Q2 and equal to or less than the first heat quantity Q1 is the target range of the heat storage quantity. However, the present invention is not limited thereto. For the target value of the heat storage quantity, at least only the upper limit (only the first heat quantity Q1) may be set. The target range of the heat storage quantity may be such that the cogeneration device is caused to operate according to the heat demand of the user, and is not limited to the range equal to or more than the second heat quantity Q2 and equal to or less than the first heat quantity Q1.

In the first change processing as illustrated in Fig. 4, the comparison of the detected heat storage quantity Qd is based on whether the heat storage quantity Qd is more than the first heat quantity Q1 or less than the second heat quantity Q2, but the present invention is not limited thereto. The comparison of the detected heat storage quantity Qd may be based on whether the heat storage quantity Qd is equal to or more than the first heat quantity Q1 or equal to or less than the second heat quantity Q2. In this case, the target range of the heat storage quantity is more than the second heat quantity Q2 but is less than the first heat quantity Q1.

### (Embodiment 3)

In an embodiment 3 of the present invention, basically, the same configuration as that of the cogeneration system 10A according to the embodiments 1 and 2 is used, but the embodiment 3 of the present invention is different from the first and second embodiments in that the control variable setting section 22 of the controller 20A in the embodiment 3 is different from that of the embodiment 1 or 2 and is configured to increase the setting value in a case where the setting value of the control variable does not change for a predetermined period of time which has been set in advance.

In the present embodiment, the electric power generation amount is used as the control variable like the embodiment 2. The specific configuration of the cogeneration system 10A has already been described in the embodiment 1, and therefore, the description thereabout is omitted in the present embodiment. Like the embodiment 2, the present embodiment is configured such that the controller 20A (the detection heat quantity comparison section 21 and the control variable setting section 22) uses the electric power generation amount (and the electric power generation start time) as the control variable to perform the first change processing of the control variable as illustrated in Fig. 4.

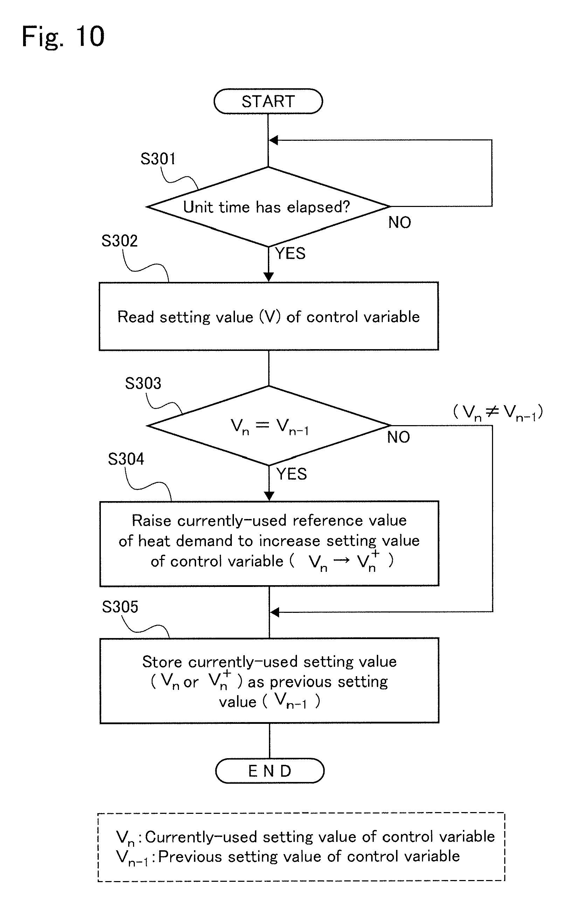

[Change (reconfiguration) processing of control variables] First, the change processing of the control variable performed by the control variable setting section 22 in the cogeneration system 10A according to the present embodiment will be described with reference to Fig. 10 (and Fig. 2). The change processing of the control variable in the present embodiment is different from the control variable first change processing (change processing as illustrated in Fig. 4) according to the embodiment, and therefore, it will be referred to as "the second change processing of the control variable" for the sake of convenience of description.

As illustrated in Fig. 10, this second change processing includes five steps. First, the control variable setting section 22 determines whether or not the unit time (for example, one day) has elapsed (step S301). This is because the control variable is set for each unit time. When the unit time has not yet elapsed, this determination is repeated (NO in step S301), but when the unit time has elapsed (YES in step S301), the control variable setting section 22 reads setting values V of the control variables from the memory 31 (step S301).

In the present embodiment, when the control variable setting section 22 sets or changes the setting values V of the control variables, the control variable setting section 22 outputs the setting values V of the control variables to the operation control section 23, and also outputs the setting values V of the control variables to the memory 31 and stores the same therein. At this occasion, the memory 31 may be configured to store the previous setting value and the current (currently-used) setting value, instead of storing all the setting values V upon starting the operation control. Therefore, the control variable setting section 22 reads the setting value V of each of the previous and current unit times from the memory 31 (see arrows in both directions in Fig. 2).

Among the setting values V which have been read, the setting value of the currently-used control variable is denoted as "Vₙ", and the setting value of the previous control variable is denoted as "Vₙ₋₁". In this case, the control variable setting section 22 determines whether or not the currently-used setting value Vₙ is equal to the previous setting value Vₙ₋₁ (step S303). When Vₙ is equal to Vₙ₋₁ (YES in step S303), the setting values of the control variables are considered to be the same in the previous and current unit times (two days), and there is no change therein. Accordingly, the control variable setting section 22 increases the reference value of the currently-used heat demand to increase the setting value Vₙ of the currently-used control variable (step S304). It should be noted that the increased setting value is denoted as "Vₙ⁺". The control variable setting section 22 stores the increased setting value Vₙ⁺ of the control variable in the memory 31 as the previous setting value Vₙ₋₁ (step S305).

On the other hand, when Vₙ is not Vₙ₋₁ (NO in step S303), the control variable setting section 22 does not increase the setting value (step S304 is skipped), and stores the currently-used setting value Vₙ in the memory 31 as the previous setting value Vₙ₋₁ (step S305).

In the present embodiment, the setting value Vₙ of the previous unit time and Vₙ₋₁ of the currently-used (current) unit time are compared, and therefore, the setting values of the control variables do not change for two consecutive unit times, i.e., two days. In other words, the predetermined time for determining the change of the setting value of the control variable is two days. However, the predetermined time is not limited thereto. For example, the predetermined time may be three days or more, or may be less than two days.

The reference time for comparing the setting values of the control variables (step S301) is one unit time, i.e., one day, in the present embodiment. The change of the setting value of the control variable is done for each unit time, and therefore, the reference time may also be set to be the same as the unit time. However, the reference time is not necessarily limited to the unit time. Alternatively, the reference time may be more than the unit time or may be less than the unit time.

The change of the setting value of the control variable is done for each unit time (everyday), but for example, in order to determine that the setting value is maintained without change for three or more days, step S303 may be increased in the second change processing. More specifically, in the example of three days, in step S303 that is performed for the first time, the previous setting value and the currently-used setting value are compared, and when these setting values are the same, the setting value of two units before and the currently-used setting value may be compared in step S303 that is performed for the second time. When the setting values are the same in the second comparison, this means that the setting value of the control variable does not change for three days, but if the setting values are different in the second comparison, this means that the setting value of the control variable does not change for two days. Accordingly, the control variable setting section 22 may overwrite the previous setting value as the setting value of two unit times before, and may overwrite the currently-used setting value as the previous setting value.

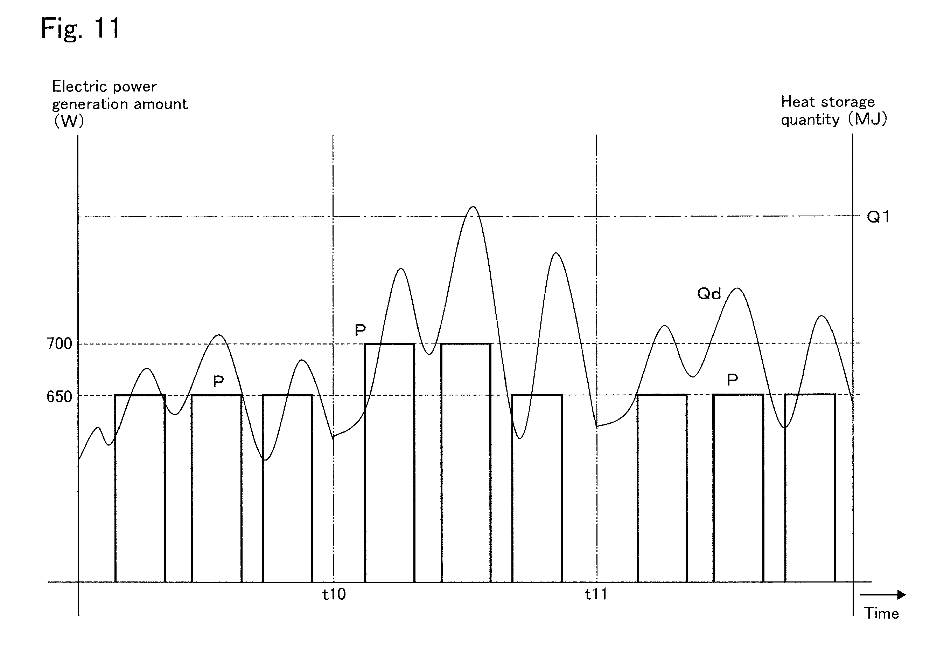

[Operation control processing of cogeneration system] Subsequently, an example of operation control processing of the cogeneration system 10A according to the present embodiment will be described in detail with reference to Fig. 11 (and Figs. 1 and 2). Fig. 11 is a time chart illustrating change of the electric power generation amount and the heat storage quantity of the cogeneration system 10A over time. A thick line P and a thin line Qd in Fig. 11 are the same as those in the time chart of Figs. 6, 7, and 9, and therefore, description thereabout is omitted. The present embodiment is also the same as the embodiments 1 and 2 in that the "time" in its literal sense is denoted as "Tc".

For example, suppose that the control variable setting section 22 sets the value which is set in the class C as the reference value of the heat demand (80 MJ) in the initial setting, and sets P = 650 W as the setting value of the electric power generation amount which is the control variable (see Table 3). The operation control section 23 causes the cogeneration system 10A (cogeneration device 11A) to operate with the electric power generation amount P = 650 W during the fixed electric power generation start time L = H0 (not illustrated in Fig. 11). At this occasion, like the embodiment 2, the first change processing of the control variable as illustrated in Fig. 4 is performed on the basis of the detected heat storage quantity Qd.

Then, for example, suppose that the second change processing of the control variable as illustrated in Fig. 10 is started at the time Tc = t10 (steps S301, S302 of Fig. 10), and the control variable setting section 22 determines that the setting value of the electric power generation amount P stays the same at 650 W over a predetermined period of time, i.e., two or three days (YES in step S303 of Fig. 10). The control variable setting section 22 raises the currently-used heat demand from the class C to the class B, and accordingly, the reference value increases (increases from 80 MJ to 90 MJ), and therefore, the setting value of the electric power generation amount is raised from P = 650 W (Vₙ) to P = 700 W (Vₙ⁺) (step S304 of Fig. 10). Then, P = 700 W (Vₙ⁺) which is the setting value of the currently-used electric power generation amount is stored in the memory 31 as the previous setting value (Vₙ₋₁) (step S305 of Fig. 10).

Thereafter, for example, at the time Tc = t11, the second change processing of the control variable as illustrated in Fig. 10 is started (steps S301 and S302 of Fig. 10), and the control variable setting section 22 determines whether or not the setting value of the electric power generation amount is changed from P = 650 W over a predetermined period of time, i.e., two or three days (step S303 of Fig. 10). In the example as illustrated in Fig. 11, at the third day after the setting value of the electric power generation amount is raised, the setting value of the electric power generation amount decreases due to the first change processing of the control variable.

Therefore, for example, when the predetermined period of time is two days, the control variable setting section 22 finds that the currently-used (current) electric power generation amount is P = 650 W but the previous electric power generation amount is P = 700 W, and accordingly, the control variable setting section 22 determines that there is a change in the setting value of the electric power generation amount within the predetermined period of time. When the predetermined period of time is three days, the control variable setting section 22 finds that the electric power generation amount of two unit times before and the previous electric power generation amount are both P = 700 W but the currently-used (current) electric power generation amount is P = 650, and accordingly, the control variable setting section 22 determines that there is a change in the setting value of the electric power generation amount within the predetermined period of time (NO in step S303 of Fig. 10).

Therefore, the control variable setting section 22 maintains the value which is set in the class B as the currently-used reference value of the heat demand (90 MJ), and also maintains the setting value of the electric power generation amount at P = 650 W (Vₙ) (step S304 of Fig. 10 is skipped). Then, P = 650 W (Vₙ) which is the currently-used setting value of the electric power generation amount is stored in the memory 31 as the previous setting value (Vₙ₋₁) (step S305).

As described above, in the state in which the control variable is not changed for a predetermined period of time, the reference value of the heat demand is less than the actual heat demand (more specifically, the user is using the heat energy higher than the reference value of the heat demand). Accordingly, any heat quantity is not accumulated to the heat accumulator 12 continuously for a certain period of time, and therefore, in the present embodiment, when the control variable is maintained for the predetermined period of time, control is performed to increase the setting value of the control variable, so that the heat accumulator 12 can accumulate heat quantity. Accordingly, even in a case where the heat accumulator 12 of the cogeneration system 10A is not provided with any measurement instrument (or, the measurement performance is insufficient), the cogeneration system 10A can achieve operation closely suitable for the user's energy consumption quantity.

In the present embodiment, the electric power generation time is fixed at L = H0, and the electric power generation amount is configured to be changed. In other words, in the present embodiment, the electric power generation amount is employed as the control variable just like the embodiment 2. However, the present embodiment is not limited to this configuration. It is to be understood that, just like the embodiment 1, the electric power generation amount may be fixed, and the electric power generation time may be configured to be changeable. Alternatively, the heat supply quantity may be configured to be changeable.

### (Embodiment 4)

The cogeneration system according to an embodiment 4 of the present invention adds the detected heat storage quantity for a certain period of time to calculate the "energy consumption quantity", and performs the change processing of the control variable using this energy consumption quantity as the reference.

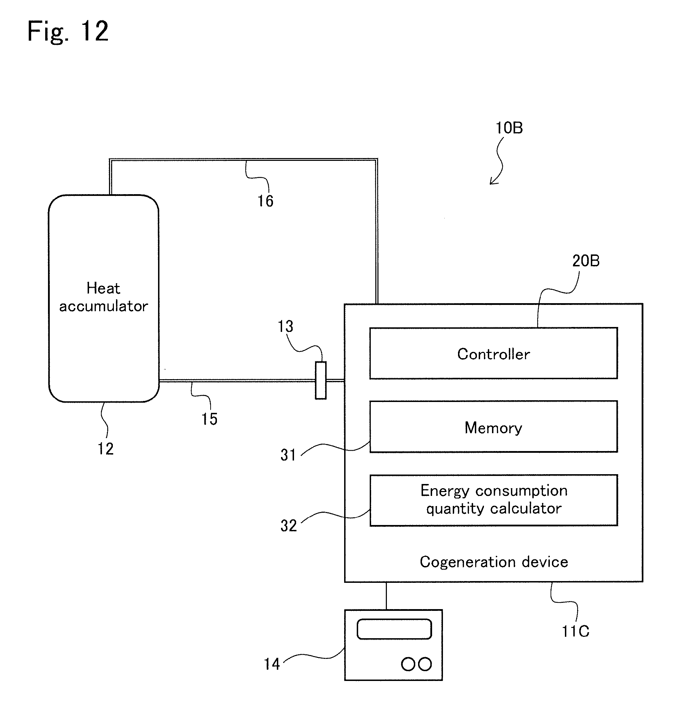

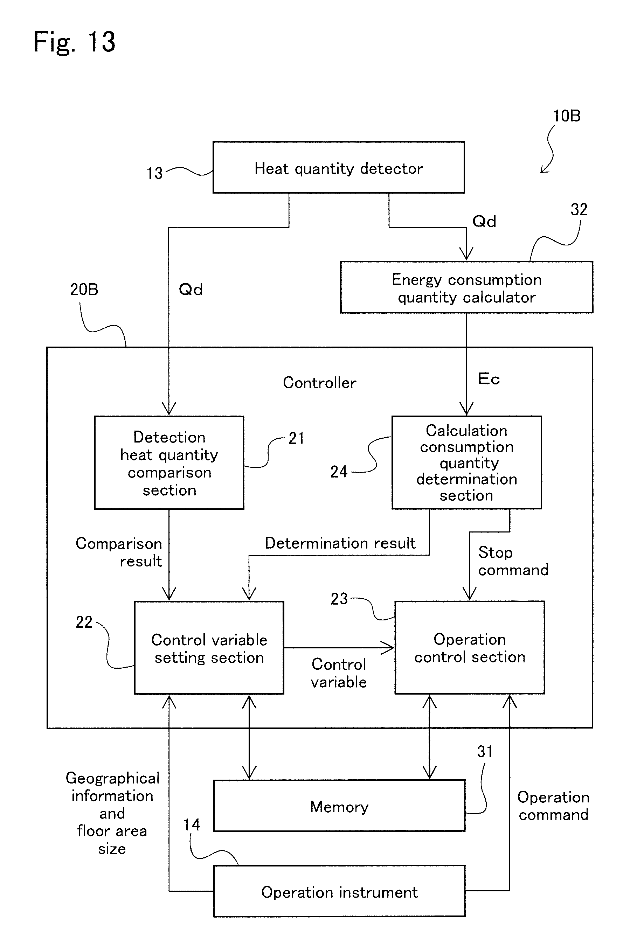

[Configuration of cogeneration system] First, an example of a specific configuration of a cogeneration system according to the present embodiment will be described with reference to Figs. 12 and 13.

As illustrated in Fig. 12, a cogeneration system 10B according to the present embodiment has basically the same configuration as the cogeneration system 10A according to the embodiments 1 to 3. The cogeneration system 10B includes a cogeneration device 11B, the heat accumulator 12, the heat quantity detector 13, the operation instrument 14, the first circuit 15, and the second circuit 16, which have been described above. The cogeneration device 11B includes a controller 20B and the memory 31. In the present embodiment, the cogeneration device 11B additionally includes an energy consumption quantity calculator 32.

As illustrated in Fig. 13, the controller 20B is basically the same as the controller 20A according to the embodiments 1 to 3. The controller 20B includes the detection heat quantity comparison section 21, the control variable setting section 22, and the operation control section 23, and additionally includes a calculation consumption quantity determination section 24.

The energy consumption quantity calculator 32 integrates the heat storage quantity Qd detected by the heat quantity detector 13 to calculate the "energy consumption quantity" consumed by the user of the cogeneration system 10B, and outputs the energy consumption quantity to the calculation consumption quantity determination section 24 of the controller 20B. In this case, the "energy consumption quantity" according to the present embodiment may be energy quantity at least including the heat consumption quantity of the heat load (heat is provided from the heat accumulator 12). In accordance with the necessity in terms of control of the cogeneration system 10B, not only the heat consumption quantity but also the energy quantity including the electric power generation amount consumed by the user may be used as the "energy consumption quantity".

The energy consumption quantity calculator 32 calculates the energy consumption quantity by integrating (adding) the heat storage quantity Qd detected within a predetermined period of time which has been set in advance, but this predetermined period of time is not particularly limited. In the present embodiment, the predetermined period of time may be one unit time (for example, one day). The present embodiment is the same as the embodiments 1 to 3 in that the heat quantity detector 13 detects the heat storage quantity Qd of the heat accumulator 12 with a cycle (for example, every minute), and therefore, the energy supply quantity provided from the heat accumulator 12 to the heat load, i.e., the energy consumption quantity consumed by the user, is calculated by integrating the detected heat storage quantity Qd for one unit time. It should be noted that the predetermined period of time is not limited to one unit time. The predetermined period of time may be two unit times or more, or may be shorter than one unit time.

The specific configuration of the energy consumption quantity calculator 32 is not particularly limited. The specific configuration of the energy consumption quantity calculator 32 may be a functional configuration achieved when an arithmetic device such as a CPU operates according to a program stored in the memory 31, or may be configured as a publicly known logic circuit and the like including a switching element, a subtracter, a comparator, and the like.

The calculation consumption quantity determination section 24 generates operation control information about the cogeneration device 11B on the basis of the energy consumption quantity calculated by the energy consumption quantity calculator 32, and outputs the operation control information to the control variable setting section 22 as illustrated in Fig. 13. The control variable setting section 22 performs the change processing of the control variable on the basis of the comparison result given by the detection heat quantity comparison section 21 and the energy consumption quantity given by the calculation consumption quantity determination section 24, and outputs the changed control variable to the operation control section 23. The operation control section 23 controls operation of the cogeneration device 11B on the basis of the control variable.

It should be noted that the specific configuration of the controller 20B including the detection heat quantity comparison section 21, the control variable setting section 22, the operation control section 23, and the calculation consumption quantity determination section 24 is not limited to the configuration as illustrated in Fig. 13. The controller 20B may include other publicly known elements, or may not include some of the elements. For example, the control variable setting section 22 and the calculation consumption quantity determination section 24 may be combined as an operation control information generation section.

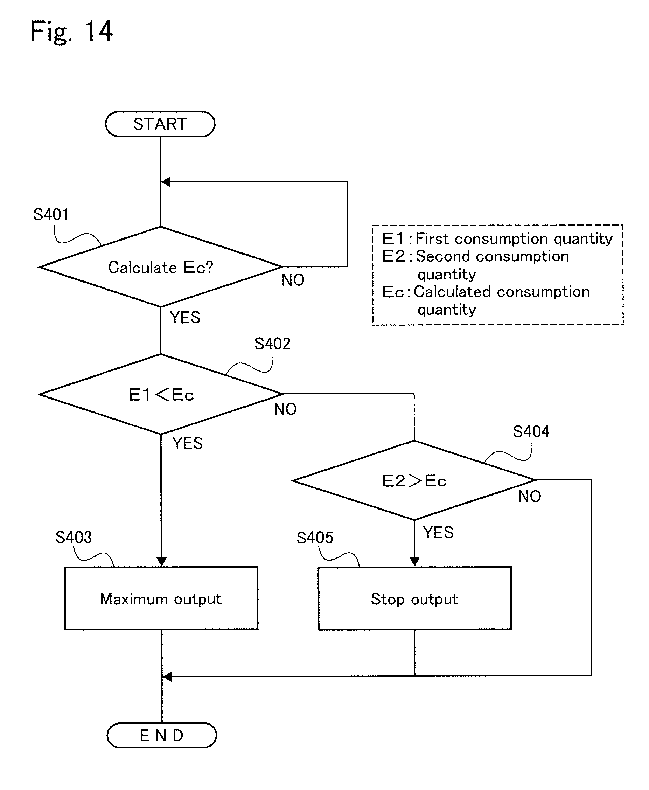

[Change processing of control variable] Subsequently, the change processing of the control variable performed by the cogeneration system 10B according to the present embodiment will be described in detail with reference to Fig. 14. Also in the present embodiment, like the embodiments 1 to 3, the first change processing of the control variable (see Fig. 4) is performed. For this reason, for the sake of convenience of description, the change processing of the control variable as illustrated in Fig. 14 will be referred to as a "third change processing of the control variable".

As illustrated in Fig. 14, in the present embodiment, the third change processing of the control variable includes five steps. First, as a precondition of the third change processing, while the controller 20A (the operation control section 23) is performing the operation control of the cogeneration device 11A, the heat quantity detector 13 detects the heat storage quantity of the heat accumulator 12 with a predetermined cycle, and outputs the heat storage quantity of the heat accumulator 12 to the controller 20A. Then, the heat quantity detector 13 detects the heat storage quantity Qd with a cycle (for example, every minute) within one unit time (for example, one day), and therefore, the controller 20A performs the first change processing of the control variable described in the embodiment 1.

Within one unit time, the detected heat storage quantity Qd is output from the heat quantity detector 13 to the energy consumption quantity calculator 32. Therefore, the energy consumption quantity calculator 32 calculates the energy consumption quantity by integrating all the heat storage quantities Qd detected in one unit time. In Figs. 13 and 14, the calculated energy consumption quantity is denoted as "Ec".

When the controller 20A starts the third change processing, first, the calculation consumption quantity determination section 24 determines whether or not the energy consumption quantity calculator 32 has calculated the energy consumption quantity Ec (step S401). When the energy consumption quantity calculator 32 is determined not to have calculated the energy consumption quantity Ec, this determination is repeated (NO in step S401), and when the energy consumption quantity calculator 32 is determined to have calculated the energy consumption quantity Ec (YES in step S401), the calculation consumption quantity determination section 24 compares the calculated energy consumption quantity Ec with a first consumption quantity E1, i.e., a reference consumption quantity which has been set in advance (step S402).

In this case, the first consumption quantity E1 is a threshold value which has been set in advance as the upper limit target value of the energy consumption quantity, and serves as a reference value for determining whether or not the energy quantity per unit time provided by the cogeneration system 10B is more than the energy quantity per unit time provided to the heat load (more specifically, the user's energy consumption quantity per unit time). The specific value of the first consumption quantity E1 is not particularly limited, but, for example, the maximum value of the energy quantity that can be provided by the cogeneration system 10B per unit time can be set as the specific value of the first consumption quantity E1.

When the calculation consumption quantity determination section 24 determines that the calculated energy consumption quantity Ec is more than the first consumption quantity E1 (E1 < Ec) (YES in step S402), the calculation consumption quantity determination section 24 outputs the determination result to the control variable setting section 22 (see Fig. 13). The control variable setting section 22 changes the control variable so as to maximize the output of the cogeneration device 11B (step S403). More specifically, for example, when the control variable is the electric power generation amount, the setting value of the electric power generation amount is changed to the maximum value, and when the control variable is the electric power generation time, the setting value of the electric power generation time is changed to the maximum value.

More specifically, when E1 is less than Ec, this means that the used energy quantity is more than the provided energy quantity, and therefore, the energy supply provided by the cogeneration system 10B is regarded as being insufficient. For this reason, when the setting value of the control variable is changed to the maximum value, the cogeneration system 10B can provide sufficient energy quantity to the heat load in the subsequent unit time. When the control variable is changed to the maximum value, the third change processing is terminated.

On the other hand, when the calculation consumption quantity determination section 24 determines that the calculated energy consumption quantity Ec is less than the first consumption quantity E1 (E1 > Ec) (NO in step S402), the calculation consumption quantity determination section 24 further compares the calculated energy consumption quantity Ec with a second consumption quantity E2 which has been set in advance as another reference consumption quantity (step S404).

This second consumption quantity E2 is a threshold value which has been set in advance as the lower limit target value of the energy consumption quantity. In the present embodiment, for example, the second consumption quantity E2 is set as the minimum energy quantity with which an advantage can be obtained in terms of energy balance by operating the cogeneration system 10B. More specifically, if the user consumes extremely small energy quantity even when the cogeneration system 10B is caused to operate, this may provide substantially no advantage for the user in terms of energy balance. Therefore, the second consumption quantity E2 which is the lower limit target value may be set as the minimum energy quantity that can be conceived of.

When the calculation consumption quantity determination section 24 determines that the calculated energy consumption quantity Ec is less than the second consumption quantity E2 (E2 > Ec) (YES in step S404), the calculation consumption quantity determination section 24 outputs a stop command to the operation control section 23, and the operation control section 23 stops the operation of the cogeneration device 11B (step S405), and terminates the third change processing. More specifically, when the calculated energy consumption quantity Ec is less than the second consumption quantity E2, this can be determined that there would be no advantage in operating the cogeneration device 11B, and therefore, the output of the cogeneration device 11B is stopped.

On the other hand, when the calculation consumption quantity determination section 24 determines that the calculated energy consumption quantity Ec is more than the second consumption quantity E2 (E2 < Ec) (NO in step S404), there would be advantage in operating the cogeneration device 11B, and therefore, the third change processing is terminated, and the cogeneration device 11B is continuously caused to operate.

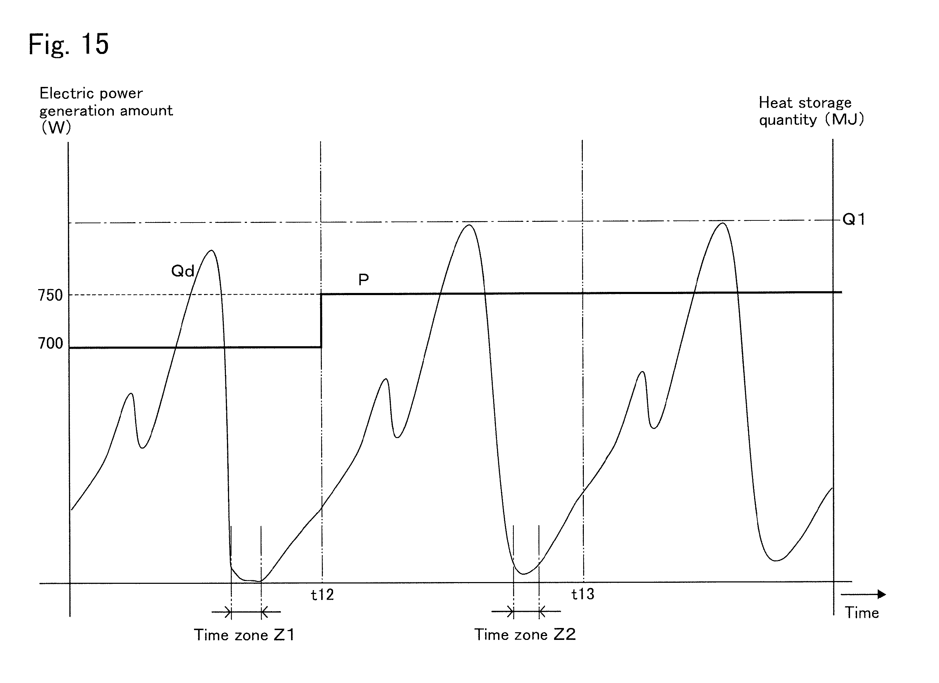

[Operation control processing of cogeneration system] Subsequently, an example of operation control processing performed by the cogeneration system 10B according to the present embodiment will be described in detail with reference to not only Figs. 12 to 14 but also Fig. 15. Fig. 15 is a time chart illustrating change of the electric power generation amount and the heat storage quantity of the cogeneration system 10B over time. A thick line P and a thin line Qd in Fig. 15 are the same as those in the time chart of Figs. 6, 7, and 9, and therefore, description thereabout is omitted. The present embodiment is also the same as the embodiments 1 to 3 in that the "time" in its literal sense is denoted as "Tc".

For example, suppose that the control variable setting section 22 sets the value which is set in the class B as the reference value of the heat demand (90 MJ) in the initial setting, and sets P = 700 W as the setting value of the electric power generation amount which is the control variable (see Table 3). In the time chart as illustrated in Fig. 15, the user's energy consumption quantity is high enough to consume, in a unit time, the energy quantity per the unit time which is provided by the cogeneration system 10B (more specifically, all the energy quantity provided in a day is consumed). Therefore, in the time chart as illustrated in Fig. 15, the heat energy is consumed to such a degree that the heat storage quantity Qd of the heat accumulator 12 comes closer to almost zero in the time zone Z1.

Then, at a time Tc = t12 which is a time after the time zone Z1 (time zone in which the heat storage quantity Qd is approximately equal to zero) in the time chart as illustrated in Fig. 15, the energy consumption quantity calculator 32 calculates the energy consumption quantity Ec, and outputs the energy consumption quantity Ec to the calculation consumption quantity determination section 24 of the controller 20B (step S401 of Fig. 14). In this case, the calculated energy consumption quantity Ec is more than the first consumption quantity E1 (YES in step S402 of Fig. 14), and therefore, the control variable setting section 22 changes the setting value of the electric power generation amount, which is the control variable, from P = 700 W to P = 750 W which is the maximum value, and the operation control section 23 controls the operation of the cogeneration system 10B on the basis of the maximum control variable (step S403).

Although not illustrated in Fig. 15, when the calculated energy consumption quantity Ec is less than the first consumption quantity E1 and is less than the second consumption quantity E2 (NO in step S402 and YES in step S404 of Fig. 14), the calculation consumption quantity determination section 24 outputs a stop command to the operation control section 23, and the operation control section 23 stops the operation of the cogeneration device 11B (step S405 of Fig. 14).

At a time Tc = t12 after the time zone Z1, the electric power generation amount of the cogeneration system 10B becomes the maximum, and therefore, even when the user greatly consumes the energy quantity in the subsequent unit time, the minimum value of the heat storage quantity Qd as shown in the time zone Z2 of Fig. 15 does not become approximately equal to zero, and the heat storage quantity increases in the time zone Z2 as compared to the time zone Z1. For this reason, at a time Tc = t13 after the time zone Z2, the calculated energy consumption quantity Ec is less than the first consumption quantity E1, and is more than the second consumption quantity E2 (NO in step S402 and NO in step S404 of Fig. 14), and therefore, it is not necessary to change the control variable. Therefore, the controller 20B (the calculation consumption quantity determination section 24) terminates the third change processing, and the operation control section 23 continues the operation of the cogeneration device 11B.

As described above, when the user consumes an energy quantity higher than the energy quantity of energy that can be provided by the cogeneration system 10B, the heat accumulator 12 cannot maintain sufficient heat storage quantity. However, according to the present embodiment, the third change processing of the control variable as illustrated in Fig. 14 is performed, so that the cogeneration system 10B can be operated with the maximum output. Therefore, even when the energy consumption quantity is high, the heat storage quantity of the heat accumulator 12 during the operation can be increased. Therefore, this can reduce the time zone in which the cogeneration device 11B can hardly provide any heat energy, for example, the time zone Z1 as illustrated in Fig. 15.

Even when the user consumes energy quantity at such a level that does not produce any advantage, the cogeneration system 10B can stop the operation of the cogeneration device 11B by performing the third change processing of the control variable. Therefore, the cogeneration system 10B can be prevented from performing useless operation, and the customer satisfaction level can be enhanced.

[Modification] In the present embodiment and the embodiments 1 to 3, the detection heat quantity comparison section 21 or the calculation consumption quantity determination section 24 outputs a stop command of operation to the operation control section 23 in order to stop the operation of the cogeneration device 11A or 11B, but the present invention is not limited thereto. For example, in Table 2 of the embodiment 1 or Table 3 of the embodiment 2, a reference value where the heat demand is 0 MJ, e.g., "class 0", is set. In the class 0, the electric power generation time, the electric power generation amount, the heat supply quantity, and the like, which are the control variables, are also set to "0".

Therefore, when the control variable setting section 22 changes heat demand to class 0, the reference value of the heat demand also becomes 0 MJ, and the setting value of the control variable also becomes 0, and therefore, with the output of the control variable from the control variable setting section 22, the operation control section 23 can stop the operation of the cogeneration device 11A or 11B.

In the present embodiment, when the operation of the cogeneration device 11B is stopped, the setting value of the control variable in the previous unit time may be stored in the memory 31. Therefore, even if the operation of the cogeneration device 11B is stopped using the calculated energy consumption quantity Ec as the reference, the setting value of the control variable thus stored can be used when the operation is resumed in the subsequent unit time.

Further, the present invention includes not only the cogeneration system having the configuration as described above but also the cogeneration system having the configuration as described below.

More specifically, a cogeneration system according to the present invention includes a cogeneration device configured to provide electric power and heat, a heat storage device (heat accumulator) configured to thermally store the heat provided by the cogeneration device, a heat quantity detection device (heat quantity detector) configured to detect a heat storage quantity accumulated in the heat storage device, and a control device (controller) configured to set at least one of control variables including a heat supply quantity, an electric power generation amount, and an electric power generation time of the cogeneration device in each unit time defined in advance, and control the cogeneration device. When the heat quantity detection device detects a heat storage quantity equal to or more than a first heat quantity defined in advance, and the cogeneration device is caused to operate in a subsequent unit time, the control device may be configured to reduce the control variable.

When the heat quantity detection device detects a heat storage quantity equal to or less than a second heat quantity which is lower than the first heat quantity, and the cogeneration device is caused to operate in a subsequent unit time, the control device may be configured to raise the control variable.

When it is detected that the control variable does not change over multiple unit times, the control device may raise the control variable.

In the cogeneration system, the control variable may be set in such a manner that a reference value is determined when at least one of a floor area size and a heat insulating performance of a building where the cogeneration device is installed is input.

When the heat quantity detection device detects a heat storage quantity equal to or more than the first heat quantity, the control device may stop the cogeneration device.

The cogeneration system further includes an energy consumption quantity calculation unit (energy consumption quantity calculator) configured to detect at least heat consumption quantity of heat load to which the cogeneration device provides heat. When the energy consumption quantity calculation unit detects a heat storage quantity equal to or more than a first consumption quantity defined in advance, the control device may control the cogeneration device upon making the control variable the maximum.

When the energy consumption quantity calculation unit detects a heat storage quantity equal to or less than a second consumption quantity lower than the first consumption quantity, the control device may perform control so as not to cause the cogeneration device to operate.

Many improvements and other embodiments of the present invention are clearly understood by a person skilled in the art from the above description. Therefore, it should be understood that the above description is interpreted as only an example, and is provided for the purpose of teaching the best aspect for carrying out the present invention to a person skilled in the art. The details of the structure and/or the function thereof can be substantially changed without deviating from the gist of the present invention. Various inventions can be formed by an appropriate combination of multiple constituent elements disclosed in the above embodiments.

### Industrial Applicability

The present invention can be preferably used for a wide range of fields of a cogeneration system having an electric power engine, a heat accumulator, and the like such as a fuel cell or a gas engine.

### Reference Signs List

10A, 10B: Cogeneration system
11 A, 11B: Cogeneration device
12: Heat accumulator
13: Heat quantity detector
14: Operation instrument
15: First circuit
16: Second circuit
20A, 20B: Controller
21: Detection heat quantity comparison section
22: Control variable setting section
23: Operation control section
24: Calculation consumption quantity determination section
31: Memory
32: Energy consumption quantity calculator

## Claims

1. A cogeneration system comprising:
a cogeneration device configured to provide electric power and heat;
a heat accumulator configured to thermally store the heat provided by the cogeneration device;
a heat quantity detector configured to detect a heat storage quantity in the heat accumulator; and
a controller,
wherein the controller sets a control variable, which is a variable according to user's heat demand, on every unit time set in advance, and controls operation of the cogeneration device, and
wherein when the heat storage quantity detected by the heat quantity detector is out of a target range of the heat storage quantity set in advance, the controller changes a setting value of the control variable in a subsequent unit time, and controls operation of the cogeneration device.

2. The cogeneration system according to claim 1,
wherein a first heat quantity which is an upper limit target value of the heat storage quantity is set in advance as a target range of the heat storage quantity, and
wherein when the heat storage quantity detected by the heat quantity detector is of a value more than the first heat quantity, the controller reduces a setting value of the control variable in a subsequent unit time, and controls operation of the cogeneration device.

3. The cogeneration system according to claim 2,
wherein a second heat quantity which is a lower limit target value of the heat storage quantity and which is a value less than the first heat quantity is set in advance as a target range of the heat storage quantity, and
wherein when the heat storage quantity detected by the heat quantity detector is of a value less than the second heat quantity, the controller increases a setting value of the control variable in a subsequent unit time, and controls operation of the cogeneration device.

4. The cogeneration system according to claim 1, wherein when the controller determines that the setting value of the control variable does not change over a plurality of consecutive unit times, the controller increases the setting value of the control variable, and controls operation of the cogeneration device.

5. The cogeneration system according to claim 2, wherein when the heat storage quantity detected by the heat quantity detector is more than the first heat quantity, the controller stops the cogeneration device in operation.

6. The cogeneration system according to claim 1,
wherein the cogeneration device includes an energy consumption quantity calculator configured to calculate an integrated value of the heat storage quantity detected by the heat quantity detector as an energy consumption quantity of the heat load,
wherein a first consumption quantity is set in advance as an upper limit target value of the energy consumption quantity, and
wherein when the energy consumption quantity calculated by the energy consumption quantity calculator is more than the first consumption quantity, the controller changes the setting value of the control variable to a maximum value, and controls operation of the cogeneration device.

7. The cogeneration system according to claim 6,
wherein a second consumption quantity which is a value less than the first consumption quantity is further set in advance as a lower limit target value of the energy consumption quantity, and
wherein when the energy consumption quantity calculated by the energy consumption quantity calculator is less than the second consumption quantity, the controller performs control so as not to cause the cogeneration device to operate.

8. The cogeneration system according to claim 1, wherein the user's heat demand is set based on at least one of a floor area size and a heat insulating performance of a building where the cogeneration device is installed.

9. The cogeneration system according to claim 1, wherein at least one of a heat supply quantity, an electric power generation amount, and an electric power generation time of the cogeneration device is used as the control variable.

10. The cogeneration system according to claim 9, wherein an electric power generation start time of the cogeneration device is further used in combination as the control variable.
